(19) **Europäisches Patentamt European Patent Office Office européen des brevets**

(11) **EP 1 896 876 B1**

(12) **EUROPEAN PATENT SPECIFICATION**

(45) Date of publication and mention of the grant of the patent:
**17.04.2013 Bulletin 2013/16**

(21) Application number: **06771614.2**

(22) Date of filing: **30.05.2006**

(51) Int Cl.:
*G01V 11/00* [(2006.01)]     *G01V 5/04* [(2006.01)]

(86) International application number:
**PCT/US2006/020943**

(87) International publication number:
**WO 2006/132861 (14.12.2006 Gazette 2006/50)**

(54) **PORE-SCALE GEOMETRIC MODELS FOR INTERPRETATION OF DOWNHOLE FORMATION EVALUATION DATA**

GEOMETRISCHE MODELLE AUF PORENMASSSTAB ZUR INTERPRETATION VON BOHRLOCHFORMATIONS-AUSWERTUNGSDATEN

MODELS GEOMETRIQUE D'ECHELLE DES PORES SERVANT A L'INTERPRETATION DES DONNEES D'EVALUATION DES FORMATIONS EN FOND DE PUITS

(84) Designated Contracting States:
**FR GB IT NL**

(30) Priority: **03.06.2005 US 147063**
**03.06.2005 US 146886**
**14.03.2006 US 782076 P**

(43) Date of publication of application:
**12.03.2008 Bulletin 2008/11**

(73) Proprietor: **BAKER HUGHES INCORPORATED Houston, TX 77019-2118 (US)**

(72) Inventors:
• **GEORGI, Daniel, T.**
  **Houston, TX 77079 (US)**
• **GLADKIKH, Mikhail**
  **The Woodlands, TX 77385 (US)**
• **JACOBI, David**
  **The Woodlands, TX 77381 (US)**
• **CHEN, Songhua**
  **Katy, TX 77494 (US)**

(74) Representative: **Chamberlain, Alan James et al Haseltine Lake LLP Redcliff Quay 120 Redcliff Street Bristol BS1 6HU (GB)**

(56) References cited:
WO-A1-02/47011     GB-A- 2 346 230
US-A1- 2003 225 521

• P.H. VALVATNE, X.D. JING AND R.M.M. SMITS: "MODELING PORE GEOMETRIC AND WETTABILITYTRENDS OF MULTIPHASE FLOW IN POROUS MEDIA", INTERNATIONAL SYMPOSIUM OF THE SOCIETY OF CORE ANALYSTS, 9 October 2004 (2004-10-09), pages 1-13, XP002670466, Abu Dhabi
• P.S. BEILBY: "Pore Scale Modelling of NMR Response in Mixed Porous Media", SOCIETY OF PETROLEUM ENGINEERS, 52084, 22 October 1998 (1998-10-22), pages 1-11, XP002670467,
• HASSAN BEHBAHANI AND MARTIN J. BLUNT: "Analysis of Imbibition in Mixed-Wet Rocks Using Pore-Scale Modeling", SOCIETY OF PETROLEUM ENGINEERS, 90132, 29 September 2004 (2004-09-29), pages 1-9, XP002670468, ISBN: 978-1-55563-151-2

**Description**

**1. Field of the Invention**

The invention is related generally to methods of interpretation of properties of subterranean earth formations using measurements made by a formation evaluation sensor or sensors. Specifically, the invention is directed towards the use of modeling methods that enable the prediction of properties that are not measured by the formation evaluation sensor or sensors.

**2. Background of the Art**

Oil or gas wells are often surveyed to determine one or more geological, petrophysical, geophysical, and well production properties ("parameters of interest") using electronic measuring instruments conveyed into the borehole by an umbilical such as a cable, a wireline, slickline, drill pipe or coiled tubing. Tools adapted to perform such surveys are commonly referred to as formation evaluation (FE) tools. These tools use electrical, acoustical, nuclear and/or magnetic energy to stimulate the formations and fluids within the borehole and measure the response of the formations and fluids. The measurements made by downhole instruments are transmitted back to the surface.

In order to reduce the amount of rig time needed for wireline logging, it is common practice to run multiple sensors in a single run. FOCUS™, from Baker Atlas Inc., is a high efficiency premium open hole logging system. All of the downhole instruments have been redesigned, incorporating advanced downhole sensor technology, into shorter, lighter, more reliable logging instruments, capable of providing formation evaluation measurements with the same precision and accuracy as the industry's highest quality sensors, at much higher logging speeds. Logging speeds are up to twice the speed of conventional triple-combo and quad combo logging tool strings. Speeds of up to 3600 ft/hr (1080 m/min) are possible. The logging system may include four standard major open-hole measurements (resistivity,-density, neutron, acoustic) plus auxiliary services.

Some petrophysical properties are easily obtained from downhole FE measurements. These include porosity, bulk density, NMR relaxation $T_1$ and $T_2$ spectra, and compressional and shear wave velocities. Other petrophysical properties that are of importance in reservoir evaluation and development are difficult if not impossible to measure. Properties that are difficult or impossible to measure include, for example permeability, relative permeability, resistivity formation factor, capillary pressure, and NMR surface relaxivity. These are typically derived from correlations or petrophysical relationships.

One of the problems with relating the different petrophysical properties of an earth formation to each other is that they are all macroscopically measured quantities that depend ultimately on the microscopic arrangement of the constituents of the earth formation. An early attempt at predicting macroscopic properties based on microscopic models is due to *Gassmann* (1951) in which the earth formation is modeled as a hexagonal close packing of equal-sized elastic spheres. Based on this simplistic model, it is possible to predict the stress dependence of the packing in terms of the moduli of the constituent spheres.

The earth, of course, is not made out of a hexagonal close packing of equal-size elastic spheres. *Finney* (1968) measured the spatial coordinates of some 8000 spheres in a random packing of spheres, thereby completely determining the geometry of the microstructure of the packing. This packing may be regarded as a physical model of a clean sediment of well-sorted sand grains. The term "sorting" refers to the distribution of grain sizes: a poorly sorted sandstone has a large range of grain sizes while a well sorted sandstone has grains of substantially the same size. Such sediments can be deposited in a wide spectrum of depositional environments, from nonmarine to basinal deep water. The model developed by Finney is primarily applicable to earth formations comprised of compacted clastic sediments. The term "clastic" refers to rocks made up of fragments of preexisting rocks. Based on the model of Finney, there have been numerous papers that discuss the prediction of formation properties. For example, *Bryant* and *Raikes* (1995) used the central core of 3367 spheres in Finney's pack, which has a porosity of 36.2% to try to predict elastic wave velocities in sandstones. In *Toumelin* et al. (2004), the NMR response of porous rocks was simulated using a continuous, three-dimensional (3D) random-walk algorithm. Diffusion pathways of individual fluid molecules are determined within the 3-D porous model. The method of *Toumelin* allows the rigorous treatment of $T_1$ and $T_2$ relaxation times with a minimum of assumptions and for arbitrary pulse sequences. *Toumelin* also discusses the numerical accuracy of the simulation. The results reproduce NMR decay and build-up while accounting for restricted diffusion in porous media, fluid wettabilities, and fluid spatial distributions.

By far the greatest amount of work using pore scale models has been in the area of determination of formation permeability. *Valvatne* et al. (2003) use pore-scale modeling in which the pore-size distribution is altered to match the capillary injection pressure for different tock types. In addition, for water flooding, contact angles are adjusted to match the measured wettability indices. *Gladkikh* and *Bryant* (2004) discuss the use of pore-scale modeling of wetting phase imbibition in porous media.

"Modeling pore geometric and wettability trends of multiphase flow in porous media" by *Valvatne* et al. (2004) describes using geologically realistic pore networks to predict relative permeability and imbibition capillary pressure using pore-scale modelling. "Pore scale modelling of NMR response in mixed porous media" by *Beilby* (1998) describes an investigation into the fundamental physics associated with nuclear magnetic resonance (NMR) logging and the incorporation of the findings into the framework of existing pore scale modelling techniques. WO 02/47011 describes methods for modelling multi-dimensional domains by merging multiple input data sets into a model, applying multiple dynamic theories to evolve the model, and using the information theory to resolve gaps in and discrepancies among the data sets and theories. "Analysis of imbibition in mixed-wet rocks using pore-scale modelling" by *Behbahani* et al. (2004) describes the use of quasi-static pore-scale network modelling as a tool to study the behaviour of mixed-wet rocks and to predict relative permeability and capillary pressure. Much of the pioneering work in pore-scale modeling for permeability determination is discussed in papers co-authored by *Bryant.* What is lacking in prior art is a compact discussion of the interrelation between the different petrophysical parameters that may be determined, and their applicability to hydrocarbon exploration in clastic sediments. The present invention addresses this need.

## SUMMARY OF THE INVENTION

One embodiment of the invention is a method of evaluating an earth formation containing clastic sediments. At least one formation evaluation sensor is conveyed in a borehole in the earth formation and a measurement is made of a property of the earth formation. A pore-scale model of the earth formation whose output substantially matches a value of the measurement is defined. The pore scale model includes grains of the clastic material. The pore scale model is used to estimate a value of an additional property of the earth formation. The measured property may be a porosity of the earth formation and the additional property may be a permeability, a formation factor, and/or a S/V probability distribution function. The pore scale model definition may include altering a size of the grains, adding a material to a pore space of the model, replacing a grain of the material, accounting for quartz overgrowth, accounting for pore-filling dispersed shale, and/or accounting for compaction. Defining the pore scale model may include using a shale indicator $V_{shale}$ obtained using a natural gamma ray measurement. The at least one additional property of the formation may be a relation between capillary pressure and a fluid saturation. The additional property further may be a permeability determined from the relation between capillary pressure and fluid saturation. The additional property may be a relationship between relative permeability and a fluid saturation, a relative permeability of a non-wetting fluid phase in the earth formation, an end-point mobility of a fluid in the earth formation, a permeability of a first fluid in the earth formation at an irreducible saturation of a second fluid in the earth formation. The FE sensor may be directionally sensitive and defining the pore-scale model may involve defining a plurality of different pore-scale models in different directions. The measurement may include NMR signals. An NMR response is simulated using the pore-scale model. A parameter of the pore-scale model is adjusted using the simulated response and the NMR signals. The simulated NMR response may include an NMR relaxation time spectrum and adjusting the parameter may be based on deriving a magnetization relaxation spectrum from the NMR signals and using the difference between the NMR relaxation time spectrum and the magnetization relaxation spectrum. The magnetization relaxation spectrum may be derived for a wetting phase that may be oil or water. The parameter being adjusted may be the grain size in the pore-scale model. The simulated NMR relaxation time spectrum may be obtained using a saturation of the wetting phase. Simulations may be made for imbibition or drainage. The difference may be reduced using a least-squares minimization. It should be noted that the terms "magnetisation relaxation spectrum" and "NMR relaxation time spectrum" refer to the same property of the earth formation and the sole reason for using different terms is that the former is used with reference to a property derived from a measurement while the latter is used with reference to a simulated property.

Another embodiment of the invention is an apparatus for evaluating an earth formation containing sediments. The apparatus includes at least one formation evaluation (FE) sensor conveyed in a borehole in the earth formation which makes a measurement of a property of the earth formation. A processor defines a pore-scale model of the earth formation whose output substantially matches a value of the measurement. The pore scale model includes grains of the clastic material. The processor estimates from the pore scale model a value of an additional property of the earth formation. The measured property may be a porosity of the earth formation. The additional property may be a permeability, a formation factor, and/or an S/V probability distribution function. The processor may define the pore scale model by at least one of altering a size of the grains in the model, adding a material to a pore space of the model, replacing a grain of the clastic material with a different material, accounting for quartz overgrowth, accounting for pore-filling dispersed shale, accounting for compaction, and/or accounting for calcite overgrowth. The processor may define the pore scale model using a shale indicator $V_{shale}$ obtained from a natural gamma ray measurement, NMR measurements, a neutron porosity measurement, and/or a density porosity measurement. The measured property may be a compressional velocity and/or a shear velocity. The at least one additional property of the formation may be a relation between capillary pressure and a fluid saturation and a permeability determined from the relation between capillary pressure and fluid saturation. The at least one additional property determined by the processor may be a relationship between relative permeability and a fluid saturation, a relative permeability of a non-wetting fluid phase in the earth formation, an end-point mobility of a fluid in the earth formation, and/or a permeability of a first fluid in the earth formation at an irreducible saturation of a second fluid in the earth formation. The at least one FE sensor may be carried on a downhole assembly conveyed in the wellbore by a wireline or a drilling tubular. The FE sensor may also be conveyed downhole on a slickline. The FE sensor may be directionally sensitive, and the processor may define the pore-scale model in a plurality of different directions using an output of an orientation sensor, Another embodiment of the invention is an apparatus for evaluating an earth formation containing sediments. The apparatus may include a Nuclear Magnetic Resonance (NMR) sensor. The processor adjusts a parameter of the pore-scale model using a simulated NMR response and NMR signals obtained by the sensor.

Another embodiment of the invention is a computer readable medium for use with an apparatus for evaluating an earth formation containing clastic sediments. The apparatus includes a Nuclear Magnetic Resonance (NMR) sensor conveyed in a borehole in the earth formation. The medium includes instructions which enable a processor to define a pore-scale model of the earth formation, the pore scale model including grains of the clastic material, simulating an NMR response and adjusting a parameter of the pore-scale model based on the NMR response and measurements made by the NMR sensor. The instructions further enable the processor to estimate from the pore scale model a value of an additional property of the earth formation. The computer readable medium may be a ROM, an EPROM, an EAROM, a Flash Memory, and/or an Optical disk.

## BRIEF DESCRIPTION OF THE FIGURES

The present invention is discussed with reference to specific logging instruments that may form part of a string of several logging instruments for conducting wireline logging operations. It is to be understood that the choice of the specific instruments discussed herein is not to be construed as a limitation and that the method of the present invention may also be used with other logging instruments as well. The present invention is best understood with reference to the accompanying figures in which like numerals refer to like elements and in which:

Fig. 1 (prior art) is a schematic illustration of a wireline logging system including a plurality of sensors.
Fig. 2 (prior art) is an elevational view of a system using radially adjustable module adapted for use in logging operations;
Fig. 3 (prior art) is a cross-sectional view of radially adjustable module positioned in an open hole portion of a borehole;
Fig. 4a (prior art) shows a 2-D slice through a random packing of equal spheres;
Fig. 4b (prior art) shows the effect of compaction on the arrangement of Fig. 4a;
Fig. 4c (prior art) shows quartz overgrowth cementation;
Fig. 5 (prior art) shows tortuosity as a function of porosity for the sandstone model of Figs. 4a-4c;
Figs. 6a and 6b (prior art) show the modeled and actual dependence of compressional and shear wave velocities on porosity;
Fig. 7 (prior art) shows a comparison of the modeled and measured permeability as a function of porosity for a sandstone;
Fig. 8 is flow chart illustrating a method of the present invention using log measurements;
Fig. 9 (prior art) is a plot comparing experimental NMR $T_2$ distribution with simulation results for a packing of fused glass beads;
Fig. 10 (prior art) is a plot of predicted NMR $T_2$ distribution for numerical packing with cement overgrowth;
Fig. 11 is a plot of simulated NMR $T_2$ distribution for unconsolidated packing during drainage and imbibition;
Fig. 12 is a plot of simulated NMR $T_2$ distribution for cemented packing during drainage and imbibition;
Fig. 13 is a flow chart of an embodiment of the invention used for determination of grain size of a model whose output matches an observed spectrum;
Fig. 14 is a comparison between measured and simulated $T_2$ distribution;
Fig. 15 is a comparison between measured permeability and the predicted permeability for cores from the Hawkins field;
Fig. 16 is a flow chart illustrating a method of the present invention using core measurements;
Fig. 17 is a flow chart illustrating a method of the present invention in which a pore scale model is used to derive additional formation properties using values of properties of a fluid in the pore space;
Fig. 18 is an exemplary plot of capillary pressure as a function of fluid saturation derived from a pore scale model and assumed values of interfacial surface tension;
Fig. 19 is a plot useful in determining brine permeability from a capillary pressure-saturation curve; and
Fig. 20 shows plots of relative permeabilities for a two phase mixture of fluids in the pore space of a rock formation.

We begin our discussion of the present invention with an overview of the different types of formation evaluation sensors whose output may be used with the method. This is followed by a discussion of some exemplary prior art methods related to pore-scale modeling of earth formations and their use in predicting macroscopic properties of earth formations that can be measured by formation evaluation sensors. Following this, the method of the present invention is discussed. It should be noted that the term "formation" as used herein includes "formation fluids."

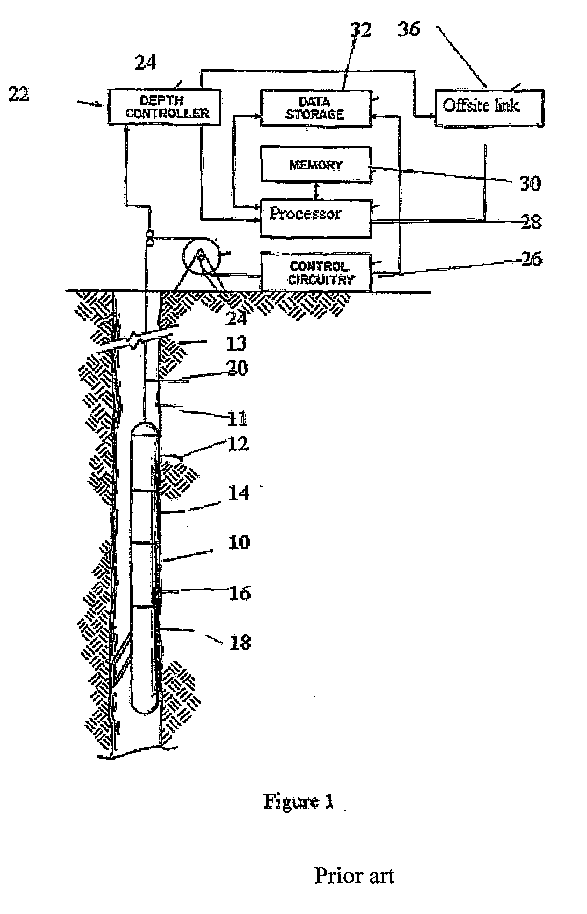

A typical configuration of the logging system is shown in **Fig.1.** This is a modification of an arrangement from US Patent 4,953,399 to Fertl et al. having the same assignee as the present invention. Shown in Fig. 1 is a suite of logging instruments 10, disposed within a borehole 11 penetrating an earth formation 13, illustrated in vertical section, and coupled to equipment at the earth's surface in accordance with the method and apparatus for determining characteristics of clay-bearing formations of the present invention. Logging instrument suite 10 may include a resistivity device 12, a natural gamma ray device 14, and two porosity-determining devices, such as a neutron device 16 and a density device 18. Collectively, these devices and others used in the borehole for logging operations are referred to as formation evaluation sensors. Resistivity device 12 may be one of a number of different types of instruments known to the art for measuring the electrical resistivity of formations surrounding a borehole so long as such device has a relatively deep depth of investigation. For example, a HDIL (High Definition Induction Logging) device such as that described in US Patent 5,452,761 to Beard et al. having the same assignee as the present invention and the contents of which are fully incorporated herein by reference may be used. Natural gamma ray device 14 may be of a type including a scintillation detector including a scintillation crystal cooperatively coupled to a photomultiplier tube such that when the crystal is impinged by gamma rays a succession of electrical pulses is generated, such pulses having a magnitude proportional to the energy of the impinging gamma rays. Neutron device 16 may be one of several types known to the art for using the response characteristics of the formation to neutron radiation to determine formation porosity. Such a device is essentially responsive to the neutron moderating properties of the formation. Density device 18 may be a conventional gamma-gamma density instrument such as that described in US Patent 3,321,625 to Wahl, used to determine the bulk density of the formation. A downhole processor may be provided at a suitable location as part of the instrument suite.

Instrument suite **10** is conveyed within borehole **11** by a cable **20** containing electrical conductors (not illustrated) for communicating electrical signals between instrument suite **10** and the surface electronics, indicated generally at **22,** located at the earth's surface. Logging devices **12, 14, 16** and **18** within instrument suite **10** are cooperatively coupled such that electrical signals may be communicated between each device **12, 14, 16** and **18** and surface electronics **22.** Cable **20** is attached to a drum **24** at the earth's surface in a manner familiar to the art. Instrument suite **10** is caused to traverse borehole **11** by spooling cable **20** on to or off of drum **24,** also in a manner familiar to the art.

Surface electronics **22** may include such electronic circuitry as is necessary to operate devices **12,14,16** and **18** within instrument suite **10** and to process the data therefrom. Some of the processing may be done downhole. In particular, the processing needed for making decisions on speeding up (discussed below) for slowing down the logging speed is preferably down downhole. If such processing is done downhole, then telemetry of instructions to speed up or slow down the logging could be carried out substantially in real time. This avoids potential delays that could occur if large quantities of data were to be telemetered uphole for the processing needed to make the decisions to alter the logging speed. It should be noted that with sufficiently fast communication rates, it makes no difference where the decision making is carried out. However, with present data rates available on MWD/LWD, the decision making is preferably done downhole.

Control circuitry **26** contains such power supplies as are required for operation of the chosen embodiments of logging devices within instrument suite **10** and further contains such electronic circuitry as is necessary to process and normalize the signals from such devices **12,14,16** and **18** in a conventional manner to yield generally continuous records, or logs, of data pertaining to the formations surrounding borehole **11.** These logs may then be electronically stored in data storage 32 prior to further processing. The processor **28** includes the ability, such as that described in US Patent 4,271,356 to Groeschel et al, for separating radiation measurements from natural gamma ray device **14** into individual energy bands centered about energy peaks of selected elemental sources of radiation, preferably the energy peaks of potassium, uranium and thorium. This processing of the natural gamma ray device could also be done by the downhole processor.

Surface electronics **22** may also include such equipment as will facilitate machine implementation of the method of the present invention. Processor **28** may be of various forms but preferably is an appropriate digital computer programmed to process data from logging devices **12, 14, 16** and **18.** Memory unit **30** and data storage unit **32** are each of a type to cooperatively interface with processor **28** and/or control circuitry **26.** Depth controller **34** determines the longitudinal movement of instrument suite **20** with borehole **11** and communicates a signal representative of such movement to processor **28.** The logging speed is altered in accordance with speedup or slowdown signals that may be communicated from the downhole processor, or provided by the surface processor, as discussed below. This is done by altering the rotation speed of the drum **24.** Offsite communication may be provided, for example by a satellite link, by the telemetry unit **36.**

While running different logging instruments in a single wireline run, the present invention may use a configuration disclosed in U.S. Patent Application Ser. No. 10/780,167 of Frost et al. filed on February 17, 2004. The teachings of *Frost* recognize the fact that different logging instruments operate best at different standoffs from the borehole wall.

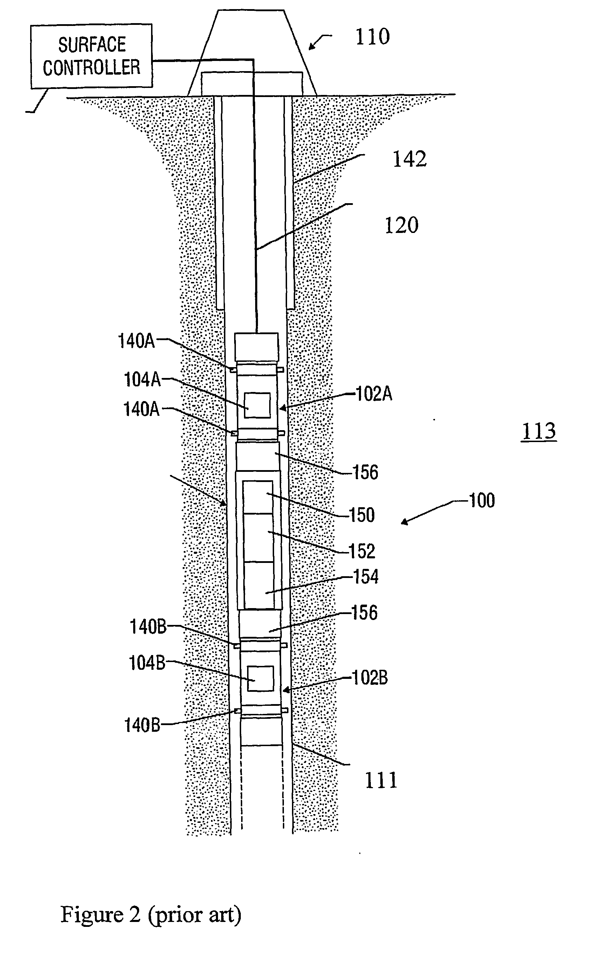

Referring next to **Fig. 2,** there is shown a rig **110** on the surface that is positioned over a subterranean formation of interest. The rig **110** can be a part of a land or offshore a well production/construction facility. A borehole formed below the rig **110** includes a cased portion **142** and an open hole portion **111.** In certain instances (*e.g.*, during drilling, completion, work-over, etc.), a logging operation is conducted to collect information relating to the formation and the borehole. Typically, a tool system **100** is conveyed downhole via a wireline **120** to measure one or more parameters of interest relating to the borehole and/or the formation **113.** The term "wireline" as used hereinafter includes a cable, a wireline, as well as a slickline. The tool system **100** can include an instrument suite comprising one or more modules **102 a, b,** each of which has a tool or a plurality of tools **104 a, b,** adapted to perform one or more downhole tasks. The term "module" should be understood to be a device such as a sonde or sub that is suited to enclose, house, or otherwise support a device that is to be deployed into a borehole. While two proximally positioned modules **102 a, b** and two associated tools **104 a, b,** are shown, it should be understood that a greater or fewer number may be used.

In one embodiment, the tool **104a** is a formation evaluation sensor adapted to measure one or more parameters of interest relating to the formation or borehole. It should be understood that the term formation evaluation sensor encompasses measurement devices, sensors, and other like devices that, actively or passively, collect data about the various characteristics of the formation, directional sensors for providing information about the tool orientation and direction of movement, formation testing sensors for providing information about the characteristics of the reservoir fluid and for evaluating the reservoir conditions. The formation evaluation sensors may include resistivity sensors for determining the formation resistivity and dielectric constant, acoustic sensors for determining the acoustic porosity of the formation and the bed boundary in formation, nuclear sensors for determining the formation density, neutron porosity and certain rock characteristics, nuclear magnetic resonance sensors for determining the porosity and other petrophysical characteristics of the formation. The direction and position sensors may include a combination of one or more accelerometers and one or more gyroscopes or magnetometers. The accelerometers preferably provide measurements along three axes. The formation testing sensors collect formation fluid samples and determine the properties of the formation fluid, which include physical properties and chemical properties. Pressure measurements of the formation provide information about the reservoir characteristics and the net confining stress.

The tool system **100** can include telemetry equipment **150,** a local or downhole controller **152** and a downhole power supply **154.** The telemetry equipment **150** provides two-way communication for exchanging data signals between a surface controller (processor) **112** and the tool system **100** as well as for transmitting control signals from the surface processor **112** to the tool system **100.**

In an exemplary arrangement, and not by way of limitation, a first module **102a** includes a tool **104a** configured to measure a first parameter of interest and a second module **102b** includes a tool **104b** that is configured to measure a second parameter of interest that is either the same as or different from the first parameter of interest. In order to execute their assigned tasks, tools **104a** and **104b** may need to be in different positions. The positions can be with reference to an object such as a borehole, borehole wall, and/or other proximally positioned tooling. Also, the term "position" is meant to encompass a radial position, inclination, and azimuthal orientation. Merely for convenience, the longitudinal axis of the borehole ("borehole axis") will be used as a reference axis to describe the relative radial positioning of the tools **104a, b.** Other objects or points can also be used as a reference frame against which movement or position can be described. Moreover, in certain instances, the tasks of the tools **104a, b** can change during a borehole-related operation. Generally speaking, tool **104a** can be adapted to execute a selected task based on one or more selected factors. These factors can include, but not limited to, depth, time, changes in formation characteristics, and the changes in tasks of other tools.

Modules **102a** and **102b** may each be provided with positioning devices **140a, 140b,** respectively. The positioning device **140** is configured to maintain a module **102** at a selected radial position relative to a reference position (e.g., borehole axis). The position device **140** also adjusts the radial position of module **102** upon receiving a surface command signal and/or automatically in a closed-loop type manner. This selected radial position is maintained or adjusted independently of the radial position(s) of an adjacent downhole device (e.g., measurement tools, sonde, module, sub, or other like equipment). An articulated member, such a flexible joint 156 which couples the module **102** to the tool system **100** provides a degree of bending or pivoting to accommodate the radial positioning differences between adjacent modules and/or other equipment (for example a processor sonde or other equipment). In other embodiments, one or more of the positioning devices has fixed positioning members.

The positioning device **140** may include a body **142** having a plurality of positioning members **144 (a, b, c)** circumferentially disposed in a space-apart relation around the body **142.** The members **144 (a, b, c)** are adapted to independently move between an extended position and a retracted position. The extended position can be either a fixed distance or an adjustable distance. Suitable positioning members **144 (a,b,c)** include ribs, pads, pistons, cams, inflatable bladders or other devices adapted to engage a surface such as a borehole wall or casing interior. In certain embodiments, the positioning members **144 (a, b, c)** can be configured to temporarily lock or anchor the tool in a fixed position relative to the borehole and/or allow the tool to move along the borehole.

Drive assemblies **146 (a, b, c)** are used to move the members **144 (a, b, c).** Exemplary embodiments of drive assemblies **146 (a, b, c)** include an electromechanical system (*e.g.*, an electric motor coupled to a mechanical linkage), a hydraulically-driven system (*e.g.*, a piston-cylinder arrangement fed with pressurized fluid), or other suitable system for moving the members **144 (a, b, c)** between the extended and retracted positions. The drive assemblies **146 (a, b, c)** and the members **144 (a, b, c)** can be configured to provide a fixed or adjustable amount of force against the borehole wall. For instance, in a positioning mode, actuation of the drive assemblies **146 (a, b, c)** can position the tool in a selected radial alignment or position. The force applied to the borehole wall, however, is not so great as to prevent the tool from being moved along the borehole. In a locking mode, actuation of the drive assembly **146 (a, b, c)** can produce a sufficiently high frictional force between the members **144 (a, b, c)** and the borehole wall as to prevent substantial relative movement. In certain embodiments, a biasing member (not shown) can be used to maintain the positioning members **144 (a, b, c)** in a pre-determined reference position. In one exemplary configuration, the biasing member (not shown) maintains the positioning member **144 (a, b, c)** in the extended position, which would provide centralized positioning for the module. In this configuration, energizing the drive assembly overcomes the biasing force of the biasing member and moves one or more of the positioning members into a specified radial position, which would provide decentralized positioning for the module. In another exemplary configuration, the biasing member can maintain the positioning members in a retracted state within the housing of the positioning device. It will be seen that such an arrangement will reduce the cross sectional profile of the module and, for example, lower the risk that the module gets stuck in a restriction in the borehole.

The positioning device **140** and drive assembly **146 (a, b, c)** can be energized by a downhole power supply (*e.g.*, a battery or closed-loop hydraulic fluid supply) or a surface power source that transmits an energy stream (*e.g.*, electricity or pressurized fluid) via a suitable conduit, such as the umbilical **120.** Further, while one drive assembly (*e.g.*, drive assembly **146 a)** is shown paired with one positioning member **144** (*e.g.*, position member **144 a),** other embodiments can use one drive assembly to move two or more positioning members. The outputs of formation evaluation sensors of the type discussed above, and the outputs of other sensors are used in the present invention in conjunction with pore-scale modeling of earth formations.

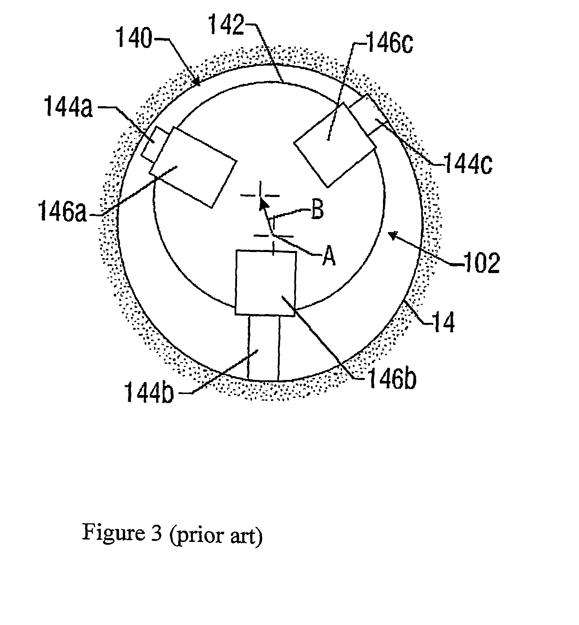

The method of the present invention is based upon the use of pore-scale modeling together with measurements that may be made by one or more FE sensors including but not limited to the types discussed above with reference to **Figs.1-3.** Before discussing the method of the present invention, we briefly review some of the basic concepts involved in pore-scale modeling.

Sedimentary rocks are traditionally classified using petrographic models. The models are used to distinguish between lithologies differing in mineralogy and matrix materials composed predominately of either terrigenous material or biochemical and inorganic chemical precipitants. The two major lithologies derived from these distinctions are "clastic" versus "carbonate" rocks. The term "carbonate" as used in *Ramakrishnan* (US 6,088,656) refers to biochemical rocks which are precipitated from water chemistry due to the metabolic processes of organisms. In a broad context, they are commonly referred to as "limestones" however their classification is further refined using other parameters. Carbonate rocks are classified according to their proportion of fine grained carbonate grains (carbonate mud) versus larger grains known as "allochems". Allochems include intraclasts, ooilites, pelloids, and fossil fragments. The most widely used classification is that of Dunham.

In contrast to carbonate classifications, clastic sedimentary rock classifications are based on varying proportions of clasts of different material and grain size composed of minerals and rock fragments. The term "clastic" is derived from a Greek word meaning broken. The accumulation of this terrigenous material is the direct result of the following dynamic subaerial and subaqueous processes: (1) gravity driven mass wasting (downslope slides), (2) winds resulting from atmospheric phenomena such as found in the aeolian environment, (3) gravity driven flowing water (fluvial and alluvial), and (4) tide and wind driven wave energy(nearshore). Subaqueous processes also include (a) gravity driven sedimentation forcing the deposition of suspended sediment onto the floor of water bodies (pelagic and lacustrian sedimentation), (b) thermally forced current flow, and (c) gravity forced turbid flow of water-saturated sediments (turbidity flow). The present invention is directed towards clastic sediments.

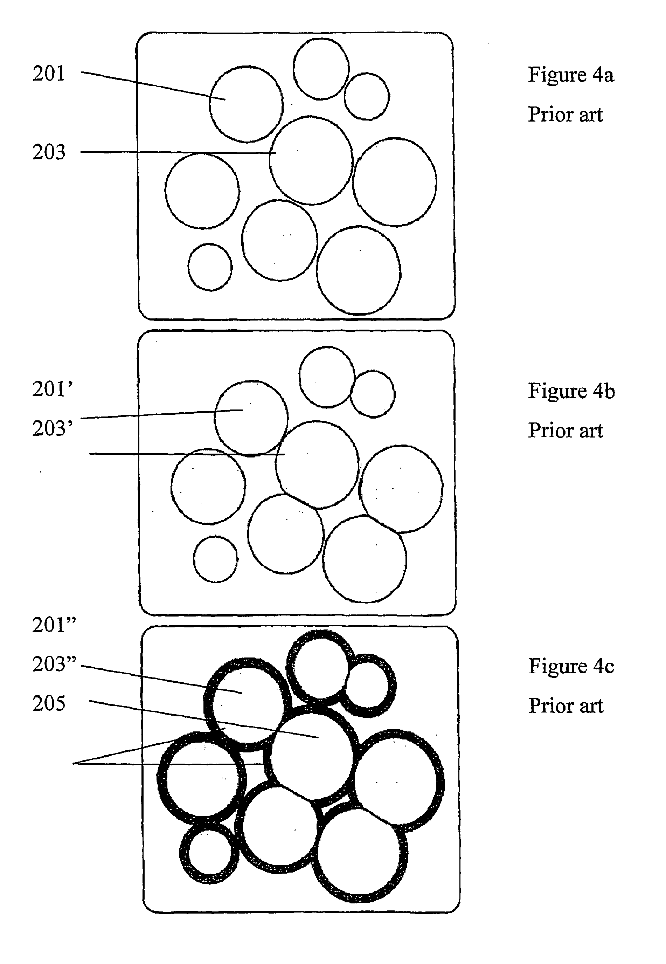

A pore scale model of spheres is the starting point for the characterization of clastic sediments. Shown in **Fig. 4a** is a 2-D slice through a random packing of equal sized spheres, two of which are denoted as **201, 203.** Note that in the 2-D slice, they appear to be of different sizes due to the fact that in the third dimension, they are displaced different distances from the plane of the 2-D slice. Compacting the spheres due to an eternal stress causes them to interpenetrate as shown by **201', 203'.** Note the reduced distance between the spheres. Quartz overgrowth leads to deposition of cement (denoted by **205)** and the positions of the two exemplary spheres is now **201", 203 ".** As discussed by *Bryant and Raikes,* the compaction is equivalent to a rescaling of one of the coordinate axes of Finney:

$$x'_j = x_{j0} + \lambda(x_j - x_{j0}) \qquad (1),$$

where $x_{j0}$ is an arbitrary reference value and $\lambda$ quantifies the degree of compaction. A physically reasonable value of $\lambda$ is $0.7 < \lambda < 1.0$, corresponding to a range of 30% to 0% decrease in bulk volume. For simplicity, *Bryant and Raikes* assume no deformation of the spheres. The cementation by quartz overgrowth is simulated by increasing the radius of the spheres in the packing without altering the location of the sphere centers:

$$R_i' = R_i + \Delta R_i \qquad\qquad (2),$$

where Ri is the radius of the *i-th* sphere. In one embodiment of the present invention, it is assumed that all grains grow uniformly, i.e., that $\Delta R$ is constant. This is the assumption made in *Bryant and Raikes.* In an alternate embodiment of the invention, this assumption is not made. It should be noted that other types of overgrowth, such as calcite overgrowth, may also be part of the model. All that is necessary is to change the elastic properties of the overgrowth material.

*Bryant and Raikes* next discuss the elastic moduli corresponding to the pore-scale model. Specifically, the Biot-Gassmann theory is used. This theory requires four parameters. They are the porosity $\phi$, the tortuosity $\tau$, the bulk modulus $K_b$ and the grain bulk modulus $G_b$. It should be noted that instead of the bulk moduli, other parameters such as the shear moduli and/or Poisson's ratio may also be used in the formulation.

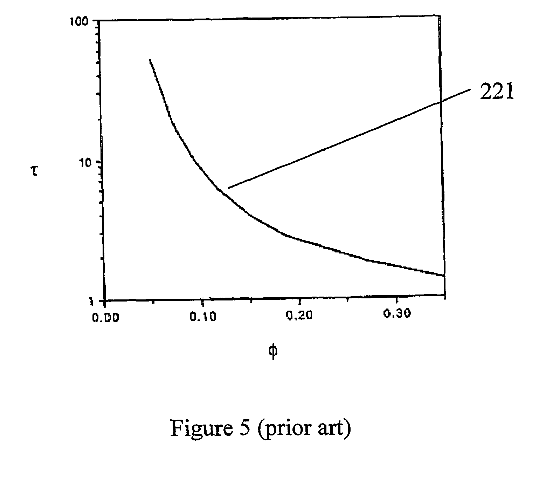

Porosity for a particular sphere pack is readily determined from the Delaunay tessellation of the sphere pack. This tessellation is a method of dividing the packing into non-overlapping tetrahedral cells. The cells fit together to completely fill the packing volume. The porosity is simply the ratio of the total void volume of the cells to the total volume of the cells. The tortuosity is the product of the porosity and the formation factor. The formation factor can be calculated from a pore-space network extracted from the tessellation without the use of adjustable parameters. **Fig. 5a** is a plot of the tortuosity **221** as a function of porosity.

To complete the Gassmann calculations, the frame moduli are calculated from Digby's grain-contact theory that requires four microstructural parameters: a, Z, and R. The porosity is determined from the Delaunay cell tessellation described above. Using the known location of each sphere in the compacted/cemented packing, the number of contacts for each sphere and the radius of the area of each contact are readily calculated. The averages of these values over the packing give the values of a and Z. The sphere radius R is fixed by the desired degree of simulated cementation.

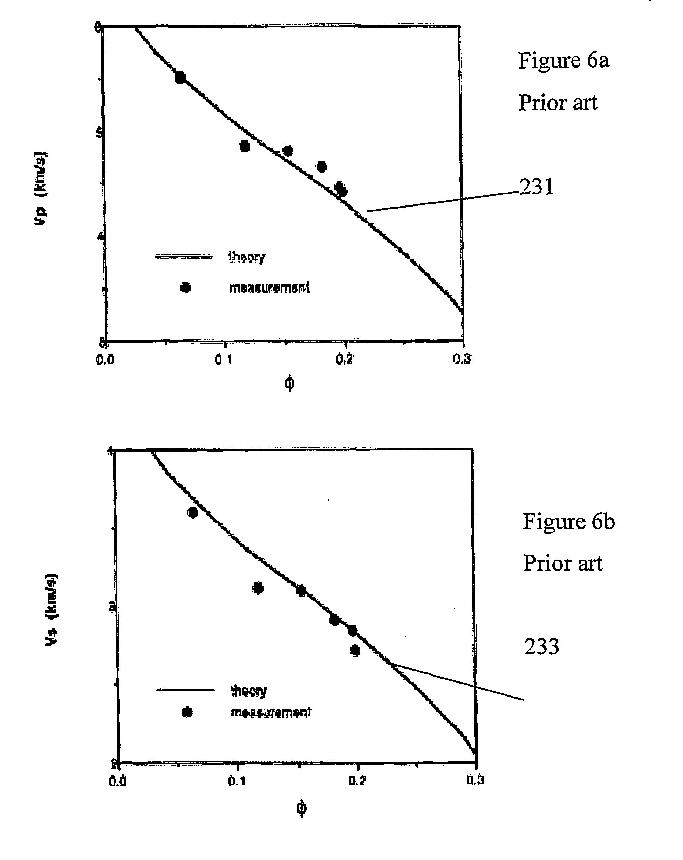

*Bryant and Raikes* also do calculations of elastic moduli using the Berryman effective medium theory. These are not discussed in detail here and the complete discussion is given in *Bryant and Raikes.* **Figs. 6a** and **6b** show plots of the compressional velocity $V_p$ as a function of porosity, and the shear velocity $V_s$ as a function of porosity respectively. The solid curves give the theoretical results for the pore-scale model while the individual points represent actual measurements on sandstones. Agreement is reasonably good. It should be noted that equivalent elastic parameters such as bulk modulus (or its reciprocal, compliance), shear modulus (or its reciprocal, compliance) and/or Poisson's ratio could also be modeled. These equivalent parameters are not easy to measure at normal logging speeds.

In one embodiment of the present invention, the porosity $\phi$ of the pore-geometrical model is adjusted heuristically to mimic known geological processes. This has been discussed in *Bryant and Raikes.* In addition to the compaction and quartz overgrowth discussed above, the present invention also envisages simulation of shale infilling. The porosity reduction of dispersed shale can be mimicked simply by randomly infilling the pore space. In all of the approaches, the porosity is decreased from the original porosity (~ 36%) until it agrees with measured porosity (e.g., wireline and/or MWD or LWD data, sidewall core data).

Given that there are many ways to reduce the porosity of the pore-geometric model one must choose one of the models. In one embodiment of the invention, a log- measured shale indicator, $V_{shale}$ (e.g., from a gamma ray log, SP log" or CBW from NMR measurements) is used. $V_{shale}$ may also be obtained from the difference in porosity derived from a neutron porosity measurement and the porosity derived from a density porosity measurement. If the $V_{shale}$ indicator exceeds some minimum value then dispersed shale is used to infill the pores until the model $\phi$ and the measured $\phi$ agree. This may be continued until available pore space is in-filled. If the apparent $V_{shale}$ is still less than the log indicated $V_{shale}$ then sand grains can be replaced with shale. The approach can be further refined by using a Thomas-Steiber approach to determine the shale distribution. A similar approach can be used to model autogenic shale.

Infilling the inter-granular porosity with shale mimics dispersed shale. It is generally accepted that the shale material contains ineffective porosity which does not contribute to fluid flow but increases the bound water. One can account for the shale porosity in a more complex approach which involves increasing both the pore-filling shale and the grain diameter. For example the volume of dispersed shale can be increased in proportion to the log-measured $V_{shale}$ and in particular it can be increased by randomly adding shale with a given $\phi_{shale}$ until the $\phi_{shale} \cdot V_{shale}$ equals the NMR-derived Clay Bound Water, CBW, and the pore geometric model porosity equals the log measured porosity:

The tessellation method discussed in *Bryant and Raikes* was originally discussed in *Bryant and Blunt* for the problem of fluid flow through porous media. Flow in such a porous medium is addressed by dividing the space into tetrahedra defined by the spheres, and defining an equivalent network model of the pore space. The network model now consists of pores or void spaces connected by narrower constrictions or throats. Each cell represents a pore and each cell face is a throat. The aggregation of cell pore volumes is used to calculate the porosity of the network and the fluid saturation when different cells are occupied by different fluids. The flow paths between adjacent cells are modeled by cylinders whose radii and length are hydrodynamically equivalent to the real pore space. The basic relations are:

$$Q = g\Delta P \qquad\qquad\qquad (3),$$

where $Q$ is the volume of fluid entering or leaving the medium in unit time, $\Delta P$ is the pressure drop and g is the hydrodynamic conductivity. For Poiseuille flow in a cylinder of radius $r$ and length $l$,

$$g = \frac{\pi r^4}{8\mu l} \qquad\qquad\qquad (4).$$

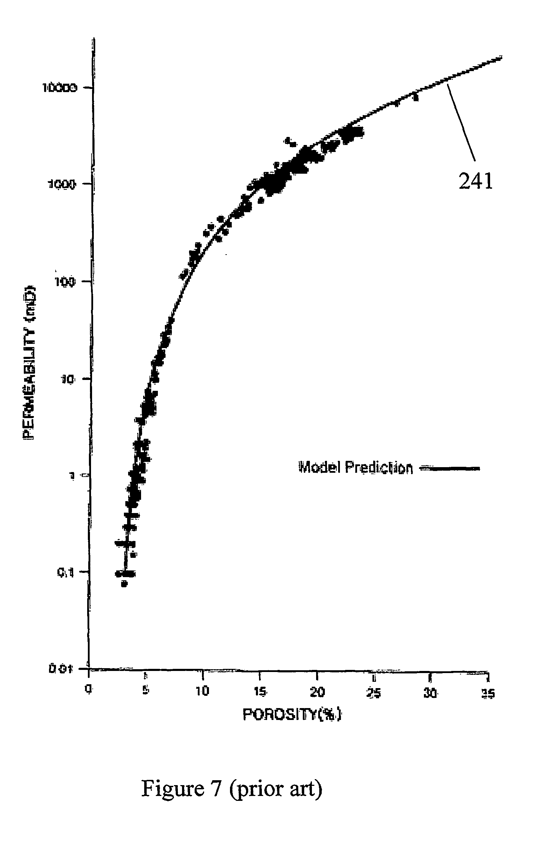

*Bryant and Blunt* show comparisons of their model prediction of permeability as a function of porosity both single phase flow and multiphase flow. **Fig. 7** shows such a comparison for measurements made on the Fountainbleau sandstone with the solid line being the model prediction and the individual points are measurements on different samples of the Fountainbleau sandstone. Agreement is good.

For two phase flow, *Bryant and Blunt* defines a wetting phase and a non-wetting phase. They consider the effects of surface tension which results in a contact angle $\theta$ which defines the angle at which the fluid interface approaches a solid surface. Initially, the wetting phase is hydraulically connected throughout the rock along a network of sub-pore-scale roughness. Non-wetting fluid is allowed to access the network through a fraction of the faces or throats chosen at random on the outer boundary of the pack. The model assumes that the non-wetting fluid enters the pack sequentially through throats with successively smaller throat radius. Using this simple model, the mercury permeability injection was simulated. *Bryant and Blunt* showed a good comparison between predicted and actual values of relative permeability for a wide range of water saturation, different rates of flow for viscous flow and capillary flow. A detailed description of the physics of the model for multiphase flow is found in *Brunt* et al. (2002).

Another problem in which pore scale modeling has been used is that of prediction of NMR properties of earth formations. *Toumelin* et al. simulate the NMR response of porous rocks using a continuous, three-dimensional (3D) random-walk algorithm that solves Bloch-Torrey equations. The Bloch-Torrey equations, sometimes called the Bloch equations, describe the macroscopic nuclear magnetization of an assemblage of nuclear spins in a magnetic field. *Toumelin* solves the Bloch equations along the diffusion pathways of individual fluid molecules within a 3D porous synthetic grain packs designed to be geologically meaningful. The general method discussed by *Toumelin* provides a rigorous treatment of $T_1$ and $T_2$ relaxations with a minimum of assumptions and for arbitrary pulse sequences. *Toumelin* also discusses the issue of numerical accuracy of the simulation. The method explicitly accounts for diffusion in porous media, fluid wettabilities, and fluid spatial distributions. *Toumelin* concluded that currently available 2D NMR methods cannot correctly diagnose substantial diffusion coupling in carbonate rocks.

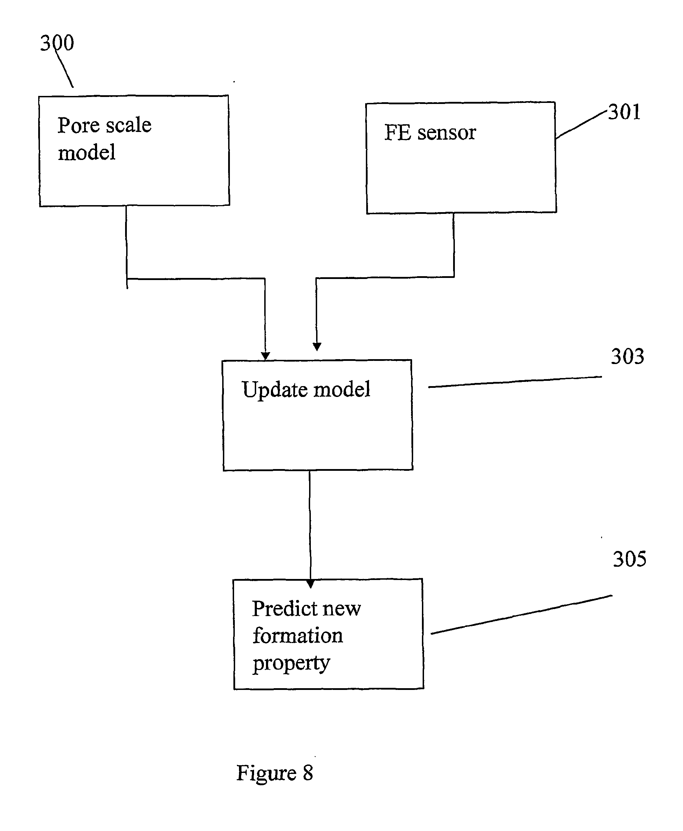

Turning now to **Fig. 8,** the basic concept underlying one embodiment of the invention is discussed. Measurements are made with a formation evaluation sensor 301 such as an acoustic sensor, a density sensor, a porosity sensor, or an NMR sensor. When acoustic sensors are used, both compressional and shear wave velocities may be measured. When an NMR sensor is used, as noted above, the pulse sequences should be chosen so that estimates of $T_1$, $T_2$ and $D$ are obtained. In certain cases, it may be sufficient to get at least one of $T_1$, $T_2$ and $D$. The outputs of the FE sensor are matched with the outputs of a pore scale model **300** and, based on the comparison, the parameters of the pore scale model are altered **303.**

In one embodiment of the invention, the FE sensor is a porosity sensor. The porosity may be determined directly from a neutron porosity device, NMR, or may be inferred from a gamma ray device in combination with knowledge of the lithology of the earth formation. The porosity of the pore-scale model is adjusted to match the observed porosity. Once this has been done, the formation permeability, formation factor and surface to volume (S/V) probability distribution function is calculated. This has been discussed above with reference to **Fig. 7** and *Bryant and Blunt.*

In another embodiment of the invention the FE sensor is an NMR sensor. It is common practice to interpret the NMR data in terms of a pore size distribution. The pore size distribution can then be used in the pore scale model to determine other parameters that are harder to measure.

Nuclear magnetic resonance are particularly useful because of they contain information about grain size. Without such information it is difficult to make accurate predictions of some important properties of the rock, such as absolute permeability and capillary pressure curves. Numerical simulations are by their nature *dimensionless,* and therefore their results must be scaled appropriately to obtain desired *dimensional* properties. Measured spectrum of NMR relaxation times provides an opportunity to infer grain size for the successful scaling of dimensionless predictions.

NMR techniques have been employed in petroleum industry to either predict permeability or for fluid typing. The former application uses the surface relaxation mechanism to relate measured relaxation time spectra with surface-to-volume ratios of the pores and then use in permeability correlations. The usual approach is based on Brownstein and Tarr [8] model. They considered the diffusion equation for total magnetization with surface-like sinks and obtained exact solution for the magnetization decay in *isolated spherical pore,* which is the sum of decreasing exponential functions. Moreover, they have shown, that in *the fast diffusion limit, given by*

$$\rho r / D \ll 1, \tag{5}$$

where $\rho$ is surface relaxivity, $r$ is the radius of spherical pore, and $D$ is water diffusivity. The lowest relaxation mode has much larger amplitude than other modes, and in this case the magnetization decays in time as a single exponential function:

$$M(t) = M_0 \exp\left(-t / T_2\right), \tag{6}$$

where $M_0$ is the initial magnetization and the transverse relaxation time $T_2$ is given by

$$\frac{1}{T_2} = \rho \frac{S}{V}, \tag{7}$$

where $S/V$ is the surface-to-volume ratio of the pore.

The model, described **by eqns.** (5-7) is applied now widely in petroleum industry, often disregarding assumptions that were used in its derivation. The real pore space, however, does not consist of isolated spherical pores, but is rather a complicated network-like structure of pore bodies connected by throats that restrict diffusion. Non-sphericity of pores questions the derivation of **eqns. (5-7).** Higher relaxation modes of the single pore may give significant contribution in the case of real pore space, since the assumptions under which they can be neglected may not be satisfied. Presence of connections between pores makes possible pore-to-pore coupling, when proton can diffuse sufficient distance to travel through several pores. The relaxation time of such a proton would correspond to surface-to-volume ratio of all the pores traveled. The limit of fast diffusion would not always be satisfied as well. For example, in the presence of pore-lining clay minerals, such as chlorite, which is often associated with high iron surface content and has very high surface-to-volume ratio, magnetic moment of proton will relax almost immediately at the moment when proton reaches pore wall. Evidently, such relaxation regime can not be considered to be in fast diffusion limit.

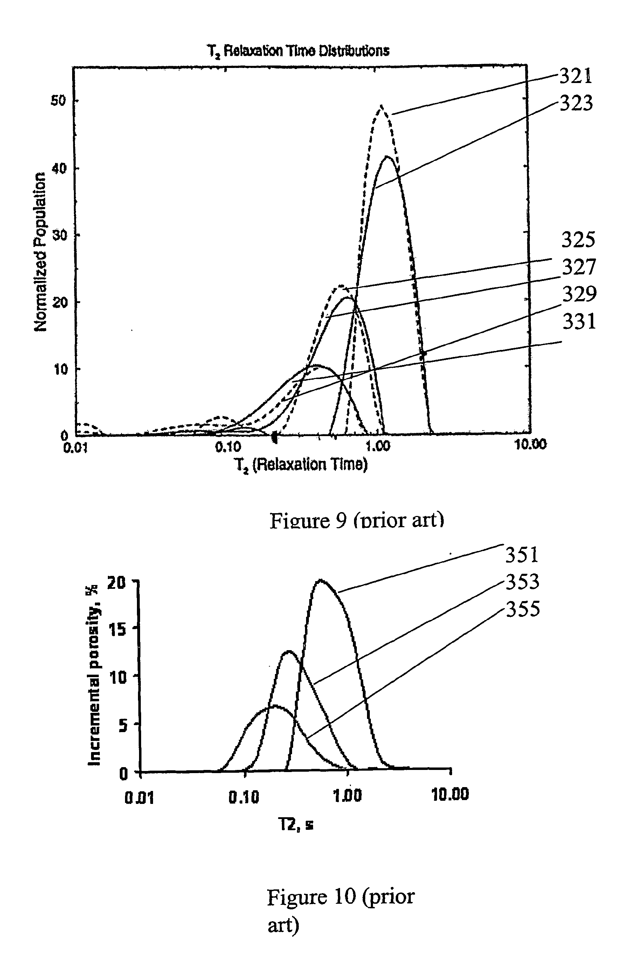

In one embodiment of the present invention, Delaunay tessellation subdivides pore space of the packing into tetrahedral pores. Surface-to-volume ratio is easily computed for each pore. If the values of grain size and surface relaxivity are specified, the application of eq. (7) immediately yields $T_2$ spectrum for the packing fully saturated with water. **Figs. 9** and **10** depict a comparison between experimental $T_2$ spectra and predicted $T_2$ spectra. **Fig. 9** shows the comparison for experimental **321** and predicted **323** spectra for unconsolidated glass beads with a grain diameter of 100 $\mu$m for a porosity $\phi$ = 0.38. The curves **325, 327** show a similar comparison for $\phi$ = 0.22, while **329, 331** shows results for $\phi$ = 0.14. **Fig.10** shows the predicted distribution for the numerical packing with overgrowth cement at porosities of 0.36 **(351)**, 0.22 **(353)** and 0.14 **(355)** respectively. The agreement between measured and simulated spectra is very good.

When pore space is partially saturated, it is still possible to predict $T_2$ distribution using **eqn. (7).** During either drainage (fluid is drained from the rock) or imbibition (fluid is added to a dry rock), the morphology of the wetting phase is computed, including fully saturated pores, menisci of the wetting phase and pendular rings. See SPE90333 and Gladkikh (Ph.D Dissertation, University of Texas at Austin, 2005). The distribution of fluids in the pore space will be different during drainage and imbibition, resulting in different properties.

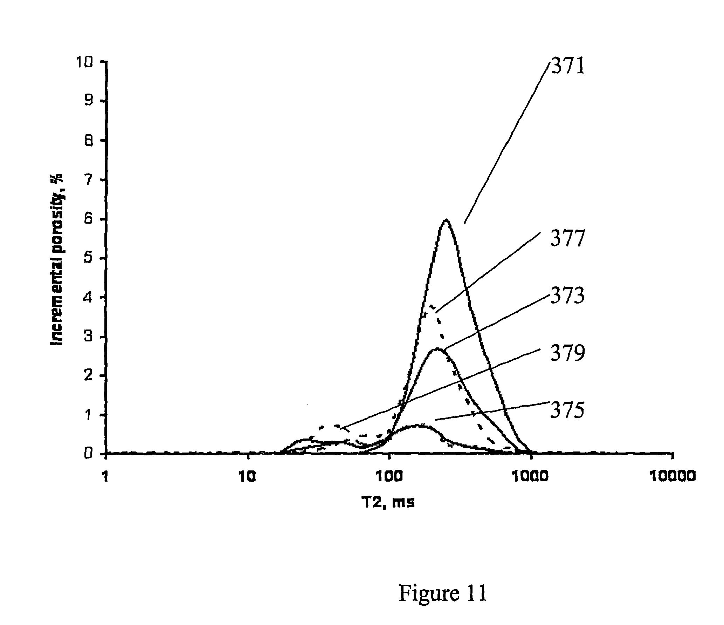

Referring to **Fig. 11,** the curve **371** is for 100% wetting-phase saturation ($S_w$). The curve **373** is for $S_w$=0.53 during draining and **375** is for $S_w$=0.18 while draining. The curve **377** is for $S_w$=0.19 during imbibition and **379** is for $S_w$=.58 during imbibition. The grain diameter was taken as 100 $\mu$m and the surface relaxivity was 2.6 x 10$^{-3}$ cm/s. The contact angle was taken as 0°.

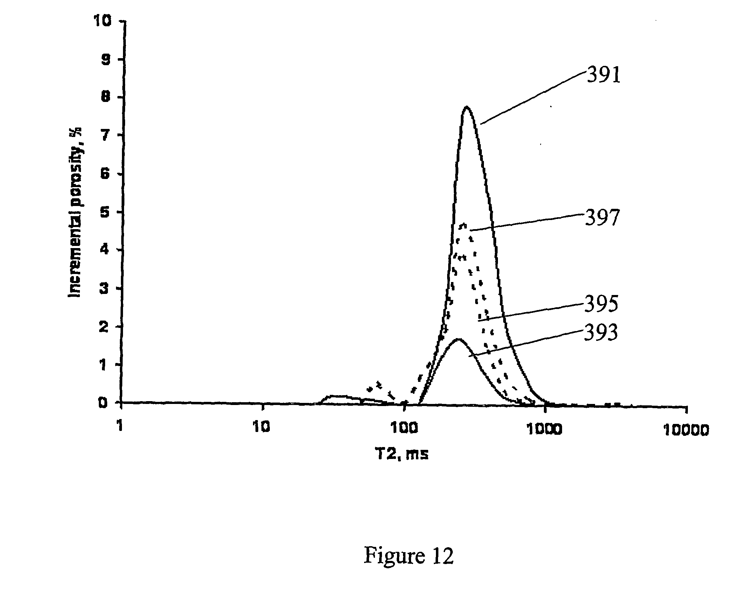

**Fig. 12** shows results for a glass packing having $\phi$ = .187 with overgrowth cement. **391** is for $S_w$=1., **393** is for Sw=.25 drained, **395** is for $S_w$=.49 during imbibition and **397** is for $S_w$=.63 during imbibition.

It can be seen on **Figs. 11** and **12** that as wetting-phase saturation decreases, the peak in the distribution that corresponds to fully saturated pores decreases (non-wetting phase occupies some of the pores), shifts to the left (wetting phase remains in small pores), and additional peak at much smaller times appears. This new peak corresponds to the contribution from pendular rings and menisci to the total signal. All of these effects are usually observed in laboratory experiments.

A commonly used prior art model is that of *Coates et al,* which estimates the permeability using subdivision of the relaxation spectrum into the contributions from "movable" (free fluid index - FFI) and "capillary bound" (bulk water irreducible-BVI) fluids:

$$K_C = C\phi^4 \left( \frac{FFI}{BVI} \right)^2 . \qquad (8),$$

Here *C* is an empirical constant and *FFI+BVI* = $\phi$. For a given $T_2$ distribution the relative values of *FFI* and *BVI* are defined by some threshold value of transverse relaxation time $T_{2cutoff}$. This threshold is also purely empirical; the value of 33 ms is commonly used for sandstones. The basis of **eqn. (8)** is a Kozeny - Carman type relationship for permeability derived from the *bundle of capillary tubes* model. Therefore, **eqn. (8)** suffers from the internal inconsistency. The derivation is based, first, on **eqns. (5-7)** valid for the isolated spherical pore, and, second, on a Kozeny - Carman approach, valid for parallel non-intersecting capillary tubes. Moreover, in order to use **eqn. (8)** one must first determine two empirical constants ($T_{2cutoff}$ and *C*), which questions practical applicability of the model.

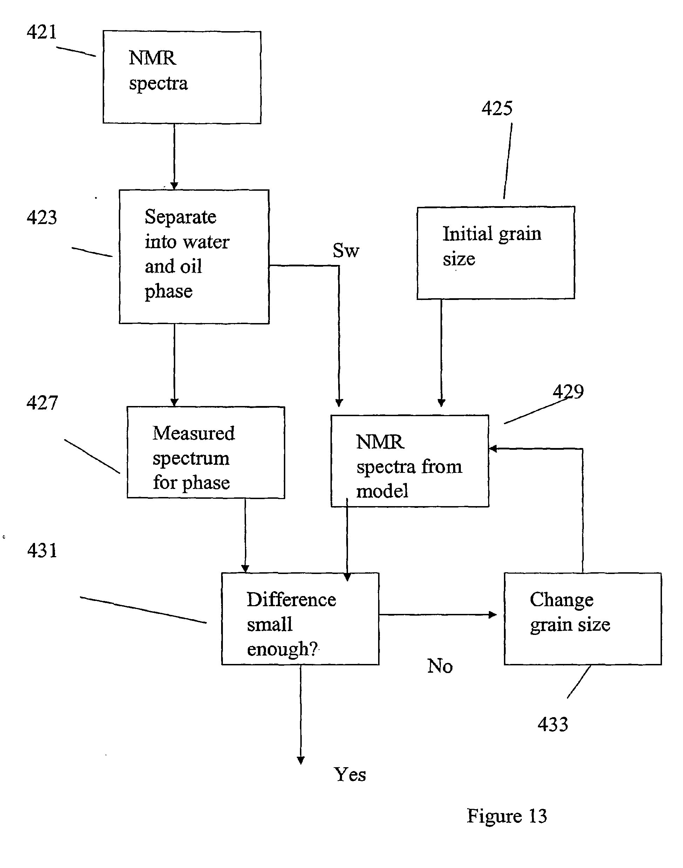

In the present invention, a different approach is used. The method is illustrated by the flow chart of **Fig.13.** The method starts with the NMR relaxation spectra **421.** The spectra may be longitudinal relaxation time ($T_1$) spectra or transverse relaxation time ($T_2$) spectra. We discuss an example in which $T_2$ spectra are used, but this is not to be construed as a limitation of the invention. The spectrum is subdivided into the contributions from the water and oil phase **423.** This may be done, for example, using the diffusivity contrast between oil and water. This then gives a signal only from water **427.** In parallel, a grain size for a pore-scale model is selected **425** and NMR spectra are predicted **429** for the particular wetting-phase saturation in the real data. This includes the effect of drainage or imbibition depending upon the reservoir conditions. The measured spectrum is compared with the model **431** simulated output. If the difference between the spectra is too large, the grain size is changed **433** and the pore-scale model output recomputed **429.** To infer mean value of grain size we simulate relaxation time distribution for a range of grain sizes numerically. We choose that grain size, which provides the closest fit to the measured data. As a criterion for the fitting we use the minimization of quadratic error:

$$R_{grain} = \min_{R^J_{grain}} \left( \sum_{i=1}^{N_{bins}} \left( \phi_i^{sim} - \phi_i^{meas} \right)^2 \right) \qquad (9).$$

This value of grain size is used to scale computed dimensionless permeability to its dimensional value. It should be noted here that such a methodology allows inverting $T_2$ relaxation spectrum to compute absolute permeability of the formation. However, it is entirely based on Brownstein - Tarr model **(Eqs. (5-7))**. It should be noted that the simulation proceeds in a similar manner for both $T_1$ and $T_2$ relaxation time distributions.

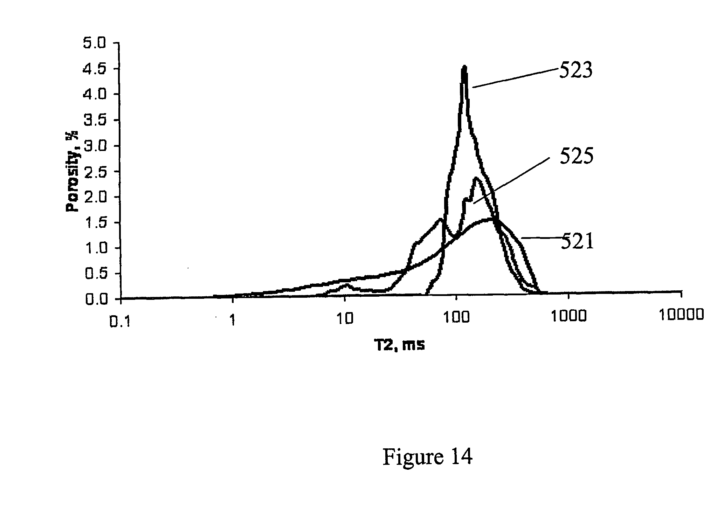

To predict permeability of the samples we used *NMR* relaxation time distribution and **eqn. (9)** to infer grain size. Two types of simulations were made. In the first simulation, we assume that the rock consists of quartz grains with overgrowths and the value of surface relaxivity is the same for all depths. This value (2.3x10$^{-3}$ cm/s) is estimated by matching both $T_2$ distribution and measured air permeability for the sample with the highest value of permeability. **Fig. 14** shows the actual NMR $T_2$ distribution **521** along with the best fit **523** obtained by selecting a grain size based on **eqn. (9).**

The second type of simulation uses more complicated pore-scale model and attempts to utilize mineralogical information. From X-ray diffraction data for two samples we know that there is about 2-3% kaolinite and 5% chlorite (both are weight percentages) present in the sample. Therefore, we introduced into the pore space 2% (weight) of pore-filling clay with the following parameters: clay porosity is 50%; surface relaxivity is $2.0 \times 10^{-2}$ cm/s; density is 2.8 g/cm$^3$. It was assumed that hydraulic conductivity of this clay is negligible. To take into account pore-lining clay, we assumed that the surface of each grain within each tetrahedral pore can have altered value of surface relaxivity with probability 5%. This altered value represents the much faster surface relaxivity of chlorite and was chosen to be $2.0 \times 10^{-2}$ cm/s. The remaining rock material was supposed to be quartz with overgrowths, having the value of surface relaxivity $2.6 \times 10^{-3}$ cm/s. All the parameters are essentially unknown *a priori* and are assumed so that predicted $T_2$ distribution provides good agreement with the measured distribution. These parameters, however, are not empirical, as for example, is the $T_{2cutoff}$ value used in Coates model given by **eqn. (8)**. They have physical nature and can, in principle, be measured independently. The result is shown by **525** in **Fig. 14**. When no data are available (for example, in log interpretation in the absence of core data) surface relaxivity of quartz, reported in the literature may be used. See, for example SPE22723 of *Coates* et al.

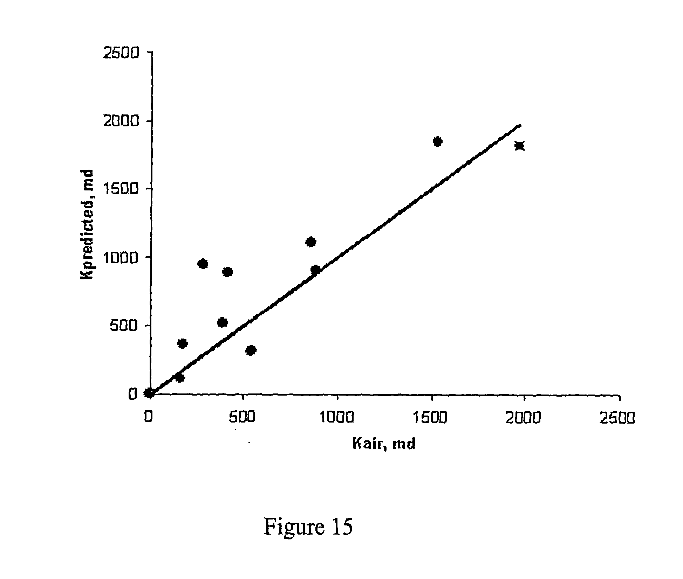

Turning now to **Fig. 15,** a comparison of measured air permeability (abscissa) against the predicted air permeability using the first simulation method discussed above, i.e., with no clay infilling (ordinate) is shown. The comparison is reasonably good. Additional simulation was done using the second method, i.e, with clay infilling, was done, but in this case only a marginal improvement was obtained.

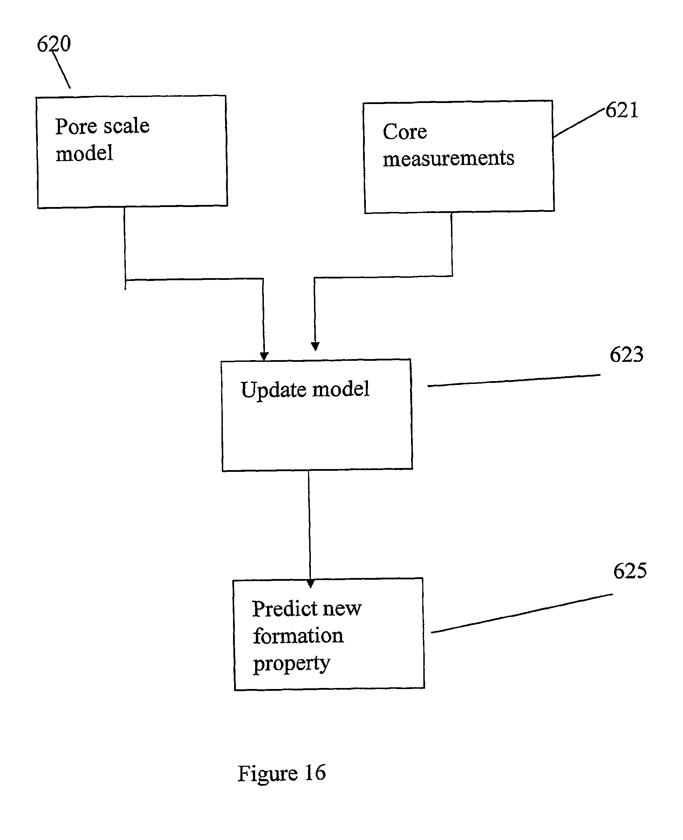

In another embodiment of the invention shown in **Fig. 16,** instead of using measurements from a first FE sensor to adjust **623** the pore-scale model **620 ,** core measurements **621** are used. Cores may be obtained from core barrels conveyed at the end of a drillstring or may be sidewall cores obtained using percussion or rotary drilling. Such coring devices are well known in the art. For the purposes of this invention, the coring devices should be such as to maintain the integrity of the core samples so that conventional and/or special analysis of the cores can be made at the surface.

The surface analysis typically involves preparing a thin section of the core sample for examination under a microscope. Based on the examination of the thin sections, porosity and a grain size distribution can be estimated. In addition, the amount of quartz overgrowth can also be determined from a thin section. It is preferable but not essential that the porosity estimate made in surface measurements be corrected for downhole stress conditions. As noted in *Domenico* (1977), the total change in porosity for a sand pack studied ranged from .3817 at 400 psi (2.76 MPa) to .3672 at 5000psi (34.5 MPa). For consolidated sandstones where quartz overgrowth has cemented the sand grains together, the porosity change is even less due to the high elastic modulus of quartz. The thin section observations may include the amount of dispersed shale in the core, the determined values being part of the pore-space model and may be used for permeability calculations.

Using the parameters determined from the thin sections, it is possible to predict **625** *in situ* properties such as permeability using the method of *Bryant* et al. (1993) without making flow measurements on either the core sample, or flow measurements in the well. One problem of interest is in laminated reservoirs where there is vertical heterogeneity. By obtaining core samples from the different layers and estimating permeability in the different layers, estimates may be made of the bulk permeability in horizontal and vertical directions. As is well known, the horizontal permeability in a laminated reservoir is a weighted average of the permeabilities in the individual layers. The permeability in a direction perpendicular to bedding is obtained by a weighted average of the reciprocals of the permeability.

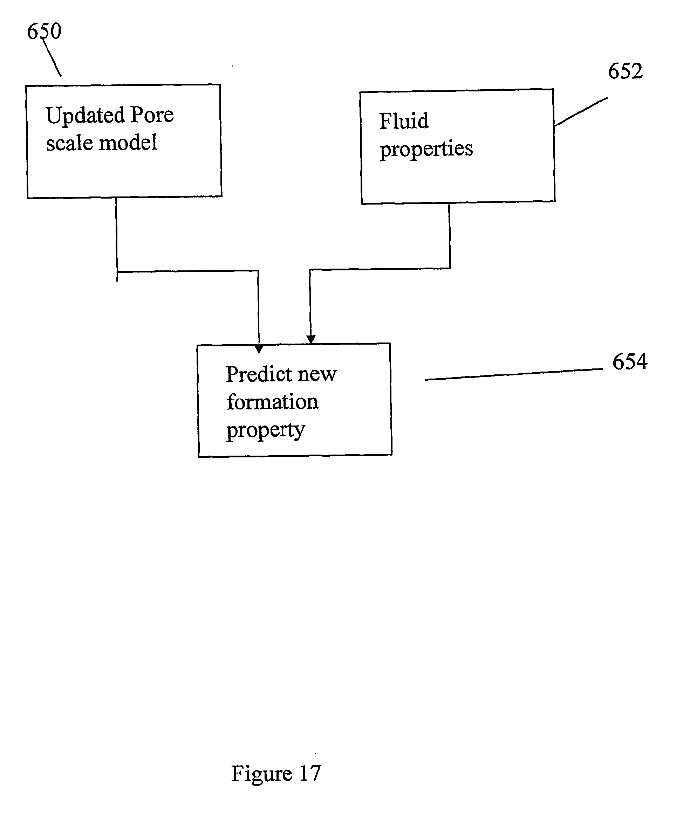

Another embodiment of the invention **(Fig. 17)** starts with an updated pore scale model of rock properties **650** and uses obtained fluid properties **652** to determine properties of a reservoir **654**. The fluid properties may be obtained, for example, from NMR measurements *(in situ* or on recovered formation fluids), and/or from measurements made on recovered formation fluids. Formation fluids can be recovered, for example, using the method and apparatus described in US 5303775 of Michaels et al., US6557632 to Cernosek or US6157893 to Berger et al. The first three are example of wireline devices while the last one is an example of a MWD device. Specific examples of determination of reservoir properties are discussed next.

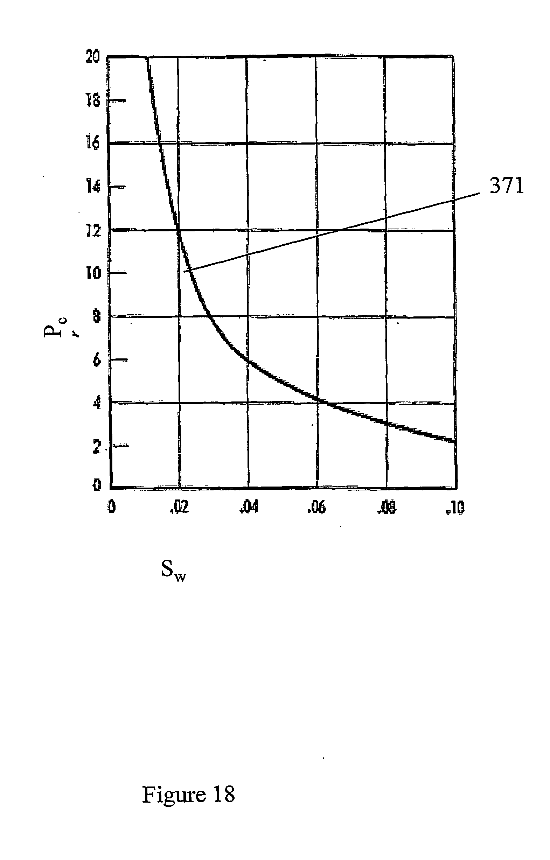

In one embodiment of the invention, a relation between capillary pressure and water saturation may be determined. As noted in *Hirasaki* (3-1), the capillary pressure $P_c$ across an interface is given by

$$P_c = \frac{2\sigma}{r} \tag{10}$$

where $\sigma$ is the interfacial surface tension. The pore scale model discussed above gives a pore size distribution model from which a fluid saturation such as water saturation $S_w$ may be determined. **Eqn. (10)** also gives a direct relation between the pore size and the capillary pressure. Thus, it is possible to derive a relation between capillary pressure and fluid saturation from the pore scale model and knowledge of the interfacial surface tension. Using an assumed value of $\sigma$ (or value of $\sigma$ determined by other means) and the previously determined pore size distribution, the capillary pressure distribution can be obtained, and thus the water saturation that gives the capillary pressure is obtained. The relation is depicted by **371** in **Fig. 18.**

From knowledge of the capillary pressure curve (obtained above using the cumulative distribution of pore radii), the water saturation as a function of elevation above the free water level can be calculated. As noted in *Hirasaki* (3-3), this requires satisfying the condition:

$$P_c\left(S_w\right)=\left(\rho_w-\rho_o\right)gh \qquad (11),$$

where the $\rho$'s are densities (subscript $w$ refers to water and subscript $o$ refers to oil or hydrocarbon), $g$ is the acceleration due to gravity and h is the height of the water column having a saturation $S_w$.

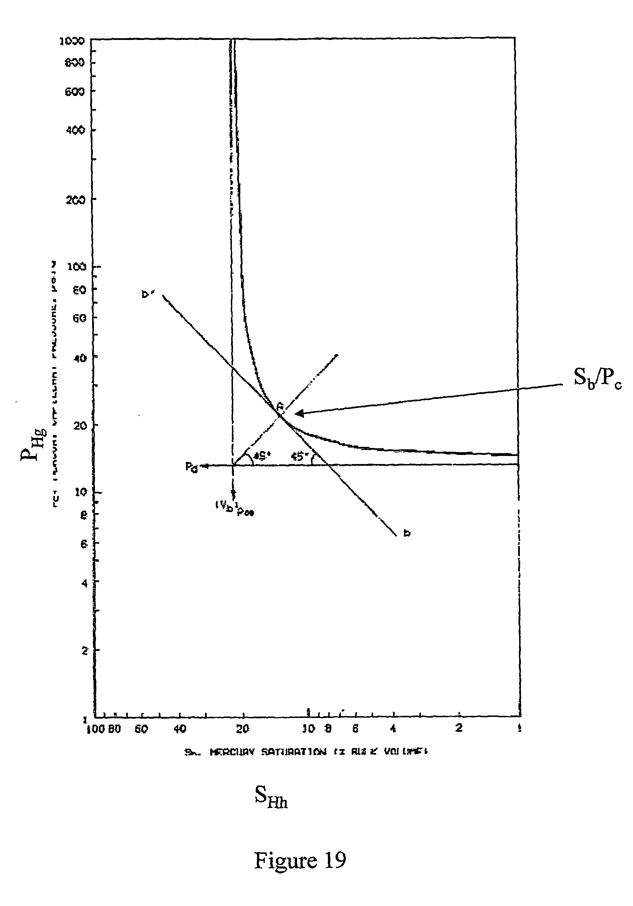

In another embodiment of the invention, brine permeability may be estimated for a particular pore scale model. One method uses a methodology developed by *Swanson*. The $P_c$-$S$ relation is developed for mercury using the method outlined above. As disclosed by *Swanson*, this relation is plotted on a log-log scale. On the log-log plot, the particular ratio of $S_b/P_c$ at which the plot is asymptotic to a 45° line is determined (see **Fig. 19**). The brine permeability is then given by a relationship of the form:

$$K_w = C\left(\frac{S_b}{P_c}\right)^B \qquad (12),$$

where B and C are calibration constants and $K_w$ is the brine permeability. It should be noted that the particular form of **eqn. (12)** is not to be construed as a limitation to the method: what is important is that the brine permeability can be determined from a mercury saturation curve that is derivable from the pore scale geometric model.

The present invention also envisages determination of relative permeabilities of a mixture of fluids. An exemplary method is given by *Purcell* using the Pc-S curves as:

$$k_{rw} = \frac{\int_0^{S_w} dS_w/(P_c)^2}{\int_0^1 dS_w/(P_c)^2} \qquad (13)$$

where $k_{rw}$ and $S_w$ are the relative permeability and saturation of the wetting phase. Similarly, the relative permeability of the non-wetting phase is given by:

$$k_{ro} = \frac{\int_{S_w}^1 dS_w/(P_c)^2}{\int_0^1 dS_w/(P_c)^2} \qquad (14).$$

It should be noted that the method given by *Purcell* is only for exemplary purposes, and other relations such as those from *Burdine* or *Corey* may be used. The *Burdine* model introduces a tortuousity factor $\lambda_{rw}$ of the wetting phase:

$$k_{rw} = \left(\lambda_{rw}\right)^2 \frac{\int_0^{S_w} dS_w / (P_c)^2}{\int_0^1 dS_w / (P_c)^2} \qquad (15),$$

where

$$\lambda_{rw} = \frac{\tau_w(1.0)}{\tau_w(Sw)} = \frac{S_w - S_m}{1 - S_m} \qquad (16)$$

where *Sm* is the minimum wetting phase saturation from the capillary pressure curve, $\tau_w(1.0)$ and $\tau_w(S_w)$ are the tortuousities of the wetting phase when the wetting phase saturation is equal to 100% and *Sw* respectively. Other models such as the *Corey* model and/or the *Corey-Brooks* model may also be used.

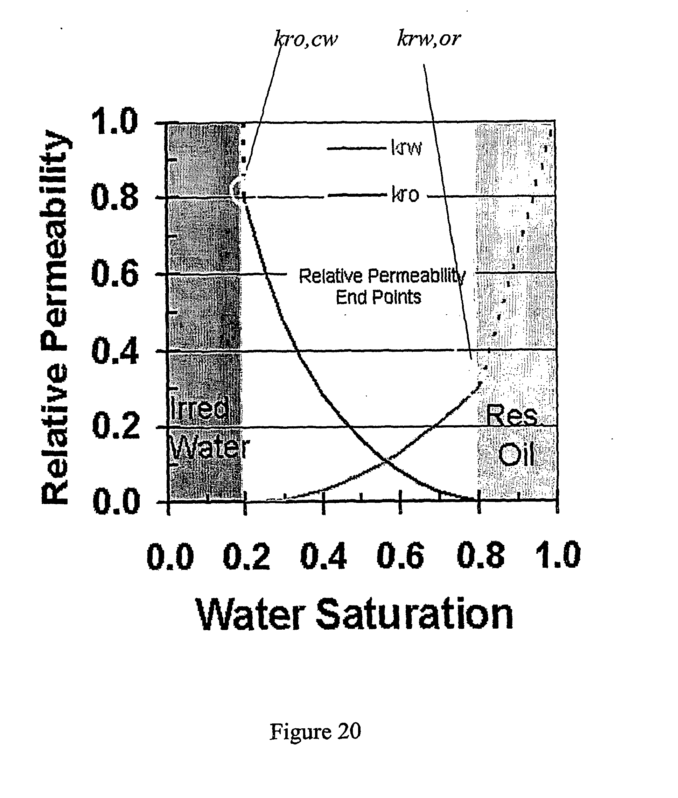

End point mobility may also be determined using an assumed value of viscosity (or a measured value such as from NMR measurements). As seen in **Fig. 20,** there are two end-point relative permeabilities. The first is the relative permeability of hydrocarbons (i.e., oil or gas) at irreducible water saturation $k_{ro,swirr}$ and is of interest when drilling in water-wet zones using an oil-based mud. The other is the relative permeability of water at residual oil saturation $k_{rw,or}$. The latter quantity is of interest in secondary recovery operations and when drilling in hydrocarbon zones using a water-based mud. Corresponding to these endpoints, we have mobilities defined by:

$$M_1 = \frac{k_{rw,or}}{\mu_w}$$
$$M_2 = \frac{k_{ro,swirr}}{\mu_o} \qquad (11),$$

and the end-point mobility ratio $M=M_1/M_2$. The quantity $k_{rw,or}$ is of particular interest in water flooding projects where the oil saturation is at residual saturation.

In one embodiment of the invention, directional measurements are made. These directional measurements can be made using directional FE sensors. Alternatively, directional core analysis is done, either from oriented sidewall cores or by azimuthal sampling of bottom-hole cores. This makes it possible to develop pore-scale geometric models that are azimuthally dependent, and thus predict azimuthally dependent properties of the reservoir. Measurements made by orientation sensors discussed above are used in this determination of azimuthal properties.

In another embodiment of the invention the pore-scale models of electric current flow (*Bryant and Pallatt,* 1996; *Gladkikh,* 2005) is used to predict formation factor. This may be done directly from the pore scale model, and does not require knowledge of grain size. Knowledge of water saturation allows then predicting resistivity index; and knowledge of water electrical conductivity - predicting formation resistivity. As described in *Bryant and Pallatt,* 1996, current *I* flows from a site j to a neighboring site k according to

$$I = g_{jk}(V_j - V_k) \qquad (13).$$

The conductivity of the packing is given by a relation of the form:

$$\sigma_0 = \frac{4\pi I^{SS}}{\dfrac{dV}{d(1/r)}} \qquad (14),$$

where $I^{SS}$ is the steady state current through the network induced by a spherical potential gradiant, V is the average voltage at network sites within a thin spherical shell of radius $r$, and $\sigma_0$ is the conductivity of the porous medium filled with conducting fluid. Customarily, the conductivity is expressed in terms of the formation factor

$$F = \frac{\sigma_w}{\sigma_0} \qquad (15),$$

where $\sigma_w$ is the conductivity of the formation fluid.

When a conducting phase such as brine is mixed with a non-conducting phase such as oil or gas, current only flows through a sub-network of the pore-space network. The sub-network is defined by the continuous conducting phase in the network. The conductivity $\sigma_t$ of this sub-network relative to the conductivity of the pore -space network when it contains only a conducting phase $\sigma_0$ is given by the resistivity index

$$I_R = \frac{\sigma_t}{\sigma_0} \qquad (14).$$

The invention has been described above with reference to a device that is conveyed on a wireline into the borehole. The method of the invention may also be used with a logging device conveyed into a borehole on a tubular, such as a drillstring. The logging device may also be conveyed downhole on a slickline, the data stored in a suitable memory device and processed subsequent to retrieval of the slickline. The processing of the data may be done downhole using a downhole processor at a suitable location. It is also possible to store at least a part of the data downhole in a suitable memory device, in a compressed form if necessary. Upon subsequent retrieval of the memory device during tripping of the drillstring, the data may then be retrieved from the memory device and processed uphole.

Implicit in the control and processing of the data is the use of a computer program on a suitable machine readable medium that enables the processor to perform the control and processing. The machine readable medium may include ROMs, EPROMs, EEPROMs, Flash Memories and Optical disks.

## Claims

1. A method of evaluating an earth formation containing clastics, the method comprising:

(a) convening at least one formation evaluation (FE) sensor in a borehole in the earth formation containing clastics and making a measurement of a first property of the earth formation;
(b) defining a pore-scale model of the earth formation whose output matches the measurement, the model including grains having a distribution of grain sizes; and
(c) estimating from the pore scale model a value of an additional property of the earth formation.

2. The method of claim 1 wherein the output of the pore-scale model substantially matches the measurements.

3. The method of claim 1 wherein the first property is a porosity of the earth formation.

4. The method of claim 1 wherein the additional property is selected from the group consisting of (i) a permeability, (ii) a formation factor, (iii) an S/V probability distribution function, (iv) a relationship between relative permeability and a fluid saturation, (v) a relative permeability of a non- wetting fluid phase in the earth formation, (vi) an end-point mobility of a fluid in the earth formation, and (vii) a permeability of a first fluid in the earth formation at an irreducible saturation of a second fluid in the earth formation.

5. The method of claim 1 wherein defining the pore scale model further comprises at least one of (i) altering a size of the grains, (ii) adding a material other than the material to a pore space of the model, (iii) replacing a grain of the material with a different material, (iv) accounting for quartz overgrowth, (v) accounting for pore-filling dispersed shale, and (vi) accounting for compaction.

6. The method of claim 1 wherein defining the pore-scale model further comprises using a shale indicator $V_{shale}$ obtained using at least one of (i) a natural gamma ray measurement, (ii) NMR measurements, (iii) a neutron porosity measurement, and (iv) a density porosity measurement.

7. The method of claim 1 wherein the at least one FE sensor further comprises an NMR sensor and wherein the first property is at least one of (i) a longitudinal relaxation time $T_1$ of the formation, (ii) a transverse relaxation time $T_2$ of the formation, and (iii) a diffusivity of the formation.

8. The method of claim 7 wherein defining the pore-scale model further comprises:

    (A) deriving a magnetization relaxation spectrum from NMR signals obtained by the at least one NMR sensor; and
    (B) adjusting a parameter of the pore-scale model using a difference between an NMR relaxation spectrum derived from the pore-scale model and the magnetization relaxation spectrum.

9. The method of claim 8 wherein deriving the magnetization relaxation spectrum further comprises using a wetting phase selected from (I) a wetting phase of water, and (II) a wetting phase of oil.

10. The method of claim 8 wherein the NMR relaxation spectrum is derived using at least one of (I) drainage of a wetting fluid in pore-spaces of the model, and (II) imbibition of a wetting fluid in pore-spaces of the model.

11. The method of claim 8 wherein adjusting the parameter further comprises using a least squares minimization.

12. The method of claim 1 wherein the property is at least one of (i) a compressional velocity and (ii) a shear velocity.

13. The method of claim 1 wherein the at least one additional property of the formation comprises a relation between capillary pressure and a fluid saturation.

14. The method of claim 13 wherein the at least one additional property further comprises a permeability determined from a relation between capillary pressure and fluid saturation.

15. The method of claim 1 wherein the FE sensor is directionally sensitive and wherein defining the pore-scale model further comprises defining a plurality of different pore-scale models in different directions.

16. The method of claim 1, further including the step of updating the pore-scale model using data from at least one core ; and wherein the step of estimating is performed after the updating.

17. The method of claim 16 wherein the at least one core is selected from the group consisting of (i) a sidewall core, and (ii) a bottom-hole core.

18. The method of claim 16 wherein the at least one core comprises a plurality of directional cores and wherein estimating a value of the at least one additional property of the earth formation further comprises estimating a plurality of values of the at least one additional property in a plurality of directions.

19. The method of claim 16 wherein using data from at least one core further comprises at least one of (i) analyzing a thin section of the core, and (ii) performing a grain size analysis.

20. The method of claim 16 wherein the distribution of grain sizes further comprises at least one of (i) a distribution of sand grain sizes, (ii) a distribution of quartz overgrowth, and (iii) a distribution of dispersed shale.

21. The method of claim 16 wherein the earth formation comprises a laminated formation and wherein the at least one core further comprises a plurality of cores in different laminae.

22. The method of claim 21 wherein the laminated formation comprises two constituent materials, and wherein the at least one additional property comprises a horizontal permeability and a vertical permeability.

23. An apparatus for evaluating an earth formation containing clastics, the apparatus comprising:

(a) at least one formation evaluation (FE) sensor arranged to be conveyed in a borehole in the earth formation containing clastics, the at least one FE sensor making a measurement of a first property of the earth formation; and

(b) a processor which is arranged to:

(A) define a pore-scale model of the earth formation, whose output matches the measurement, the model including grains having a distribution of grain sizes, and

(B) estimate from the pore-scale model a value of at least one additional property of the earth formation.

24. The apparatus of claim 23 wherein the processor is arranged to define the output of the pore-scale model to substantially match the measurements.

25. The apparatus of claim 23 wherein the first property is a porosity of the earth formation.

26. The apparatus of claim 23 wherein the additional property is selected from the group consisting of (i) a permeability, (ii) a formation factor, (iii) an SN probability distribution function, (iv) a relationship between relative permeability and a fluid saturation, (v) a relative permeability of a non- wetting fluid phase in the earth formation, (vi) an end-point mobility of a fluid in the earth formation, and (vii) a permeability of a first fluid in the earth formation at an irreducible saturation of a second fluid in the earth formation.

27. The apparatus of claim 23 wherein the processor is arranged to define the pore-scale model by at least one of (i) altering a size of the grains in the model, (ii) adding a material other than the material to a pore space of the model, (iii) replacing a grain of the clastic material with a different material, (iv) accounting for quartz overgrowth, (v) accounting for pore-filling dispersed shale, (vi) accounting for compaction, and (vii) accounting for calcite overgrowth.

28. The apparatus of claim 23 wherein the processor is arranged to define the pore-scale model using a shale indicator $V_{shale}$ obtained from at least one of (i) a natural gamma ray measurement, (ii) NMR measurements, (iii) a neutron porosity measurement, and (iv) a density porosity measurement.

29. The apparatus of claim 23 wherein the at least one FE sensor further comprises an NMR sensor and wherein the first property is at least one of (i) a longitudinal relaxation time $T_1$ of the formation, (ii) a transverse relaxation time $T_2$ of the formation, and (iii) a diffusivity of the formation.

30. The apparatus of claim 29 wherein the processor is arranged to defme the pore-scale model by:

(A) deriving a magnetization relaxation spectrum from NMR signals obtained by the at lest one NMR sensor; and

(B) adjusting a parameter of the pore-scale model using a difference between an NMR relaxation spectrum derived from the pore-scale model and the magnetization relaxation spectrum.

31. The apparatus of claim 30 wherein the processor is arranged to derive the magnetization relaxation spectrum using a wetting phase selected from (I) a wetting phase of water, and (II) a wetting phase of oil.

32. The apparatus of claim 30 wherein the processor is arranged to derive the NMR relaxation spectrum using at least one of (I) drainage of a wetting fluid in pore-spaces of the model, and (II) imbibition of a wetting fluid in pore-spaces of the model.

33. The apparatus of claim 30 wherein the processor is arranged to adjust the parameter by using a least squares minimization.

34. The apparatus of claim 23 wherein the first property is at least one of (i) a compressional velocity and (ii) a shear velocity.

35. The apparatus of claim 23 wherein the at least one additional property of the formation comprises a relation between capillary pressure and a fluid saturation.

36. The apparatus of claim 23 wherein the at least one additional property further comprises a permeability determined from a relation between capillary pressure and fluid saturation.

37. The apparatus of claim 23 wherein the at least one FE sensor is arranged to be carried on a downhole assembly, the apparatus further comprising a conveyance device selected from (i) a wireline, (ii) a drilling tubular, and (iii) a slickline.

38. The apparatus of claim 23 wherein the FE sensor includes an orientation sensor so that it is directionally sensitive, and wherein the processor is arranged to define the pore-scale model in a plurality of different directions using an output of the orientation sensor.

39. The apparatus of claim 23, further comprising a coring device arranged to be conveyed in a borehole in the earth formation containing clastics and to recover at least one core, and wherein the processor is arranged to use data obtained from analysis of the at least one core to update the pore-scale model, and to estimate the value of the at least one additional property from the updated pore-scale model.

40. The apparatus of claim 39 wherein the coring device is selected from the group consisting of (i) a sidewall corer, and (ii) a bottom-hole corer.

41. The apparatus of claim 39 wherein the at least one core further comprises a plurality of cores oriented in a plurality of directions and wherein the processor is arranged to estimate the value of the at least one additional property in the plurality of directions.

42. The apparatus of claim 39 wherein the processor is arranged to update the distribution of grain sizes using at least one of (i) an analysis of a thin section of the core, and (ii) a grain size analysis.

43. The apparatus of claim 39 wherein the distribution of grain sizes further comprises at least one of (i) a distribution of sand grain sizes, (ii) a distribution of quartz overgrowth, and (iii) a distribution of dispersed shale.

44. The apparatus of claim 39 wherein the earth formation comprises a laminated formation and wherein the at least one core further comprises a plurality of cores in different laminae.

45. The apparatus of claim 44 wherein the laminated formation comprises two constituent materials, and wherein the at least one additional property comprises a horizontal permeability and a vertical permeability.

46. The apparatus of claim 39 wherein the coring device is arranged to be conveyed downhole by one of (i) a wireline, and (ii) a drilling tubular.

47. A computer readable storage medium comprising instructions to cause at processor to carry out the steps of:

   (a) defining a pore-scale model of the earth formation, whose output matches the measurement, the model including grains having a distribution of grain sizes; and
   (b) estimating from the pore scale model a value of an additional property of the earth formation.

48. The computer readable medium of claim 47, the medium further comprising instructions which enable the processor to use data from a core to update the pore-scale model.

49. The computer readable medium of claim 47 or 48 further comprising at least one of (i) a ROM, (ii) an EPROM, (iii) an EAROM, (iv) a Flash Memory, and (v) an Optical disk.

**Patentansprüche**

1. Verfahren zum Bewerten einer Bodenformation, die klastisches Gestein enthält, umfassend:

   a) das Befördern mindestens eines Formationsbewertungssensors (FE-Sensors) in ein Bohrloch in der Bodenformation, die klastisches Gestein enthält, und das Vornehmen einer Messung einer ersten Eigenschaft der Bodenformation;

b) das Definieren eines Modells der Bodenformation auf Porenniveau, dessen Ausgaben mit der Messung übereinstimmen, wobei das Modell Körner enthält, die eine Verteilung der Korngrößen aufweisen; und
c) aus dem Modell auf Porenniveau das Schätzen eines Werts einer zusätzlichen Eigenschaft der Bodenformation.

**2.** Verfahren nach Anspruch 1, wobei die Ausgaben des Modells auf Porenniveau im Wesentlichen mit den Messungen übereinstimmen.

**3.** Verfahren nach Anspruch 1, wobei die erste Eigenschaft die Porosität der Bodenformation ist.

**4.** Verfahren nach Anspruch 1, wobei die zusätzliche Eigenschaft aus der Gruppe ausgewählt wird, die besteht aus: i) einer Permeabilität, ii) einem Formationsfaktor, iii) einer Oberfläche-zu-Volumen-Wahrscheinlichkeitsverteilungsfunktion, iv) einem Zusammenhang zwischen der relativen Permeabilität und einer Fluidsättigung, v) einer relativen Permeabilität einer nicht benetzenden Fluidphase in der Bodenformation, vi) einer Endpunktmobilität eines Fluids in der Bodenformation, und vii) einer Permeabilität eines ersten Fluids in der Bodenformation bei einer irreduziblen Sättigung eines zweiten Fluids in der Bodenformation.

**5.** Verfahren nach Anspruch 1, wobei das Definieren des Modells auf Porenniveau zudem mindestens umfasst: i) das Verändern der Größe der Körner, ii) das Zufügen eines Materials, das nicht das Material ist, zum Porenraum des Modells, iii) das Ersetzen eines Korns aus dem Material durch ein unterschiedliches Material, iv) das Berücksichtigen einer Quarz-Anwachsung, v) das Berücksichtigen eines porenfüllenden verteilten Schiefergesteins, und vi) das Berücksichtigen einer natürlichen Verdichtung.

**6.** Verfahren nach Anspruch 1, wobei das Definieren des Modells auf Porenniveau zudem den Gebrauch eines Schieferindikators $V_{shale}$ umfasst, den man erhält, indem man entweder: i) eine Messung der natürlichen Gammastrahlen, ii) NMR-Messungen, iii) eine Neutronen-Porositätsmessung oder iv) eine Dichte-Porositätsmessung verwendet.

**7.** Verfahren nach Anspruch 1, wobei der mindestens eine FE-Sensor zudem einen NMR-Sensor umfasst, und wobei die erste Eigenschaft mindestens eine Eigenschaft aus i) einer Längsrichtungs-Relaxationszeit $T_1$ der Formation, ii) einer Querrichtungs-Relaxationszeit $T_2$ der Formation und iii) einer Diffusität der Formation ist.

**8.** Verfahren nach Anspruch 7, wobei das Definieren des Modells auf Porenniveau zudem umfasst:

A) das Ableiten eines Magnetisierungs-Relaxationsspektrums aus NMR-Signalen, die man mittels des mindestens einen NMR-Sensors erhält; und
B) das Einstellen eines Parameters des Modells auf Porenniveau mit Hilfe einer Differenz zwischen einem NMR-Relaxationsspektrum, das aus dem Modell auf Porenniveau abgeleitet wird, und dem Magnetisierungs-Relaxationsspektrum.

**9.** Verfahren nach Anspruch 8, wobei das Ableiten des Magnetisierungs-Relaxationsspektrums zudem den Gebrauch einer Benetzungsphase umfasst, die ausgewählt wird aus: I) einer Benetzungsphase aus Wasser, und II) einer Benetzungsphase aus Öl.

**10.** Verfahren nach Anspruch 8, wobei das NMR-Relaxationsspektrum abgleitet wird mit Hilfe von mindestens: I) dem Drainieren eines Benetzungsfluids in den Porenräumen des Modells, und II) der Imbibition eines Benetzungsfluids in die Porenräume des Modells.

**11.** Verfahren nach Anspruch 8, wobei das Einstellen des Parameters ferner den Gebrauch einer Minimierung mit dem Verfahren der kleinsten Quadrate umfasst.

**12.** Verfahren nach Anspruch 1, wobei die Eigenschaft mindestens eine Eigenschaft aus i) einer Druckwellengeschwindigkeit und ii) einer Transversalwellen-Geschwindigkeit ist.

**13.** Verfahren nach Anspruch 1, wobei die mindestens eine zusätzliche Eigenschaft der Formation eine Relation zwischen dem Kapillardruck und einer Fluidsättigung umfasst.

**14.** Verfahren nach Anspruch 13, wobei die mindestens eine zusätzliche Eigenschaft zudem eine Permeabilität umfasst, die aus einem Verhältnis zwischen dem Kapillardruck und der Fluidsättigung ermittelt wird.

**15.** Verfahren nach Anspruch 1, wobei der FE-Sensor richtungsempfindlich ist und wobei das Definieren des Modells auf Porenniveau zudem das Definieren einer Anzahl unterschiedlicher Modelle auf Porenniveau in unterschiedlichen Richtungen umfasst.

**16.** Verfahren nach Anspruch 1, zudem umfassend den Schritt des Aktualisierens des Modells auf Porenniveau mit Hilfe von Daten aus mindestens einem Kern, wobei der Schritt des Schätzens nach dem Aktualisieren erfolgt.

**17.** Verfahren nach Anspruch 16, wobei der mindestens eine Kern ausgewählt wird aus der Gruppe, die besteht aus i) einem Seitenwandkern und ii) einem Kern vom Grund des Bohrlochs.

**18.** Verfahren nach Anspruch 16, wobei der mindestens eine Kern eine Anzahl Richtungskerne umfasst, und wobei das Schätzen eines Werts der mindestens einen zusätzlichen Eigenschaft der Bodenformation zudem das Schätzen einer Anzahl Werte der mindestens einen zusätzlichen Eigenschaft in einer Anzahl Richtungen umfasst.

**19.** Verfahren nach Anspruch 16, wobei das Verwenden von Daten aus mindestens einem Kern weiterhin umfasst mindestens einen Vorgang aus: i) dem Untersuchen eines dünnen Abschnitts des Kerns, und ii) dem Ausführen einer Korngrößenanalyse.

**20.** Verfahren nach Anspruch 16, wobei die Verteilung der Korngrößen zudem umfasst zumindest i) eine Verteilung der Sandkorn-Größen, ii) eine Verteilung der Quarz-Anwachsung und iii) eine Verteilung von dispergiertem Schiefer.

**21.** Verfahren nach Anspruch 16, wobei die Bodenformation eine geschichtete Formation umfasst, und wobei der mindestens eine Kern ferner eine Anzahl Kerne in unterschiedlichen Schichten umfasst.

**22.** Verfahren nach Anspruch 21, wobei die geschichtete Formation zwei bildende Materialien umfasst, und wobei die mindestens eine zusätzliche Eigenschaft eine horizontale Permeabilität und eine vertikale Permeabilität umfasst.

**23.** Vorrichtung zum Bewerten einer Bodenformation, die klastisches Gestein enthält, umfassend:

a) mindestens einen Formationsbewertungssensor (FE-Sensor), der dafür ausgelegt ist, dass er in ein Bohrloch in der Bodenformation befördert wird, die klastisches Gestein enthält, wobei der mindestens eine FE-Sensor eine Messung einer ersten Eigenschaft der Bodenformation vornimmt; und
b) einen Prozessor, der dafür ausgelegt ist:

A) ein Modell auf Porenniveau zu definieren, dessen Ausgaben mit der Messung übereinstimmen, wobei das Modell Körner enthält, die eine Verteilung der Korngrößen aufweisen; und
B) aus dem Modell auf Porenniveau einen Wert mindestens einer zusätzlichen Eigenschaft der Bodenformation zu schätzen.

**24.** Vorrichtung nach Anspruch 23, wobei der Prozessor dafür ausgelegt ist, die Ausgabe des Modells auf Porenniveau so zu bestimmen, dass es im Wesentlichen mit den Messungen übereinstimmt.

**25.** Vorrichtung nach Anspruch 23, wobei die erste Eigenschaft die Porosität der Bodenformation ist.

**26.** Vorrichtung nach Anspruch 23, wobei die zusätzliche Eigenschaft aus der Gruppe ausgewählt wird, die besteht aus: i) einer Permeabilität, ii) einem Formationsfaktor, iii) einer Oberfläche-zu-Volumen-Wahrscheinlichkeitsverteilungsfunktion, iv) einem Zusammenhang zwischen der relativen Permeabilität und einer Fluidsättigung, v) einer relativen Permeabilität einer nicht benetzenden Fluidphase in der Bodenformation, vi) einer Endpunktmobilität eines Fluids in der Bodenformation, und vii) einer Permeabilität eines ersten Fluids in der Bodenformation bei einer irreduziblen Sättigung eines zweiten Fluids in der Bodenformation.

**27.** Vorrichtung nach Anspruch 23, wobei der Prozessor dafür ausgelegt ist, das Modell auf Porenniveau zu definieren durch mindestens: i) das Verändern der Größe der Körner in dem Modell, ii) das Zufügen eines Materials, das nicht das Material ist, zum Porenraum des Modells, iii) das Ersetzen eines Korns des klastischen Materials durch ein unterschiedliches Material, iv) das Berücksichtigen einer Quarz-Anwachsung, v) das Berücksichtigen eines porenfüllenden verteilten Schiefergesteins, vi) das Berücksichtigen einer natürlichen Verdichtung, und vii) das Berücksichtigen einer Kalzit-Anwachsung.

**28.** Vorrichtung nach Anspruch 23, wobei der Prozessor dafür ausgelegt ist, das Modell auf Porenniveau zu definieren durch den Gebrauch eines Schieferindikators $V_{shale}$, den man erhält aus mindestens i) einer Messung der natürlichen Gammastrahlen, ii) NMR-Messungen, iii) einer Neutronen-Porositätsmessung und iv) einer Dichte-Porositätsmessung.

**29.** Vorrichtung nach Anspruch 23, wobei der mindestens eine FE-Sensor zudem einen NMR-Sensor umfasst, und wobei die erste Eigenschaft mindestens eine Eigenschaft aus i) einer Längsrichtungs-Relaxationszeit $T_1$ der Formation, ii) einer Querrichtungs-Relaxationszeit $T_2$ der Formation und iii) einer Diffusität der Formation ist.

**30.** Vorrichtung nach Anspruch 29, wobei der Prozessor dafür ausgelegt ist, das Modell auf Porenniveau zu definieren durch:

A) das Ableiten eines Magnetisierungs-Relaxationsspektrums aus NMR-Signalen, die man mittels des mindestens einen NMR-Sensors erhält; und

B) das Einstellen eines Parameters des Modells auf Porenniveau mit Hilfe einer Differenz zwischen einem NMR-Relaxationsspektrum, das aus dem Modell auf Porenniveau abgeleitet wird, und dem Magnetisierungs-Relaxationsspektrum.

**31.** Vorrichtung nach Anspruch 30, wobei der Prozessor dafür ausgelegt ist, das Magnetisierungs-Relaxationsspektrum mit Hilfe einer Benetzungsphase abzuleiten, die ausgewählt wird aus I) einer Benetzungsphase aus Wasser, und II) einer Benetzungsphase aus Öl.

**32.** Vorrichtung nach Anspruch 30, wobei der Prozessor dafür ausgelegt ist, das NMR-Relaxationsspektrum mit Hilfe von mindestens I) dem Drainieren eines Benetzungsfluids in den Porenräumen des Modells, und II) der Imbibition eines Benetzungsfluids in die Porenräume des Modells abzuleiten.

**33.** Vorrichtung nach Anspruch 30, wobei der Prozessor dafür ausgelegt ist, den Parameter mit Hilfe einer Minimierung mit dem Verfahren der kleinsten Quadrate einzustellen.

**34.** Vorrichtung nach Anspruch 23, wobei die erste Eigenschaft mindestens eine Eigenschaft aus i) einer Druckwellengeschwindigkeit und ii) einer Transversalwellen-Geschwindigkeit ist.

**35.** Vorrichtung nach Anspruch 23, wobei die mindestens eine zusätzliche Eigenschaft der Formation eine Relation zwischen dem Kapillardruck und einer Fluidsättigung ist.

**36.** Vorrichtung nach Anspruch 23, wobei die mindestens eine zusätzliche Eigenschaft zudem eine Permeabilität umfasst, die aus einem Verhältnis zwischen dem Kapillardruck und der Fluidsättigung ermittelt wird.

**37.** Vorrichtung nach Anspruch 23, wobei der mindestens eine FE-Sensor dafür ausgelegt ist, dass er mit einer Bohrloch-Einfahrbaugruppe befördert wird, und die Vorrichtung zudem ein Fördermittel umfasst, das ausgewählt wird aus i) einem Drahtseil, ii) einem Bohrgestänge und iii) einer Slickline.

**38.** Vorrichtung nach Anspruch 23, wobei der FE-Sensor einen Orientierungssensor enthält, damit er richtungsempfindlich ist, und wobei der Prozessor dafür ausgelegt ist, das Modell auf Porenniveau in einer Anzahl unterschiedlicher Richtungen zu definieren, und zwar mit Hilfe einer Ausgabe des Orientierungssensors.

**39.** Vorrichtung nach Anspruch 23, zudem umfassend eine Kerngewinnungsvorrichtung, die dafür ausgelegt ist, dass sie in ein Bohrloch in der Bodenformation befördert wird, die klastisches Gestein enthält, und dafür, mindestens einen Kern zu holen, wobei der Prozessor dafür ausgelegt ist, Daten, die aus der Untersuchung des mindestens einen Kerns gewonnen werden, zum Aktualisieren des Modells auf Porenniveau zu verwenden, und zum Schätzen des Werts der mindestens einen zusätzlichen Eigenschaft aus dem aktualisierten Modell auf Porenniveau.

**40.** Vorrichtung nach Anspruch 39, wobei die Kerngewinnungsvorrichtung ausgewählt wird aus der Gruppe, die aus i) einer Seitenwand-Kerngewinnungsvorrichtung und ii) einer Kerngewinnungsvorrichtung am Boden des Bohrlochs besteht.

**41.** Vorrichtung nach Anspruch 39, wobei der mindestens eine Kern zudem eine Anzahl Kerne umfasst, die in mehrere Richtungen ausgerichtet sind, und wobei der Prozessor dafür ausgelegt ist, den Wert der mindestens einen zusätzlichen Eigenschaft in den verschiedenen Richtungen zu schätzen.

**42.** Vorrichtung nach Anspruch 39, wobei der Prozessor dafür ausgelegt ist, die Verteilung der Korngrößen mit Hilfe zumindest i) einer Untersuchung eines dünnen Abschnitts des Kerns und ii) einer Korngrößenuntersuchung zu aktualisieren.

**43.** Vorrichtung nach Anspruch 39, wobei die Verteilung der Korngrößen zudem umfasst mindestens entweder i) eine Verteilung der Sandkorn-Größen, ii) eine Verteilung der Quarz-Anwachsung oder iii) eine Verteilung von dispergiertem Schiefer.

**44.** Vorrichtung nach Anspruch 39, wobei die Bodenformation eine geschichtete Formation umfasst, und wobei der mindestens eine Kern ferner eine Anzahl Kerne in unterschiedlichen Schichten umfasst.

**45.** Vorrichtung nach Anspruch 44, wobei die geschichtete Formation zwei bildende Materialien umfasst, und wobei die mindestens eine zusätzliche Eigenschaft eine horizontale Permeabilität und eine vertikale Permeabilität umfasst.

**46.** Vorrichtung nach Anspruch 39, wobei die Kerngewinnungsvorrichtung dafür ausgelegt ist, dass sie entweder durch i) ein Drahtseil oder ii) ein Bohrgestänge in das Bohrloch befördert wird.

**47.** Computerlesbares Speichermedium, umfassend Befehle, die einen Prozessor veranlassen, die Schritte auszuführen:

a) das Definieren eines Modells der Bodenformation auf Porenniveau, dessen Ausgaben mit der Messung übereinstimmen, wobei das Modell Körner enthält, die eine Verteilung der Korngrößen aufweisen; und
b) aus dem Modell auf Porenniveau das Schätzen eines Werts einer zusätzlichen Eigenschaft der Bodenformation.

**48.** Computerlesbares Medium nach Anspruch 47, wobei das Medium zudem Befehle umfasst, die es dem Prozessor erlauben, Daten von einem Kern zum Aktualisieren des Modells auf Porenniveau zu verwenden.

**49.** Computerlesbares Medium nach Anspruch 47 oder 48, zudem umfassend mindestens eine Vorrichtung aus i) einem ROM, ii) einem EPROM, iii) einem EAROM, iv) einem Flashspeicher und v) einer optischen Disk.

## Revendications

**1.** Procédé d'évaluation d'une formation terrestre contenant des matériaux clastiques, le procédé comprenant :

(a) convoyer au moins un capteur d'évaluation de formation (FE) dans un trou de forage dans la formation terrestre contenant des matériaux clastiques et faire une mesure d'une première propriété de la formation terrestre ;
(b) définir un modèle de l'échelle des pores de la formation terrestre dont la sortie correspond à la mesure, le modèle incluant des grains ayant une distribution de tailles de grains ; et
(c) estimer par le modèle à l'échelle des pores une valeur d'une propriété additionnelle de la formation terrestre.

**2.** Procédé selon la revendication 1, dans lequel la sortie du modèle de l'échelle des pores correspond sensiblement aux mesures.

**3.** Procédé selon la revendication 1, dans lequel la première propriété est une porosité de la formation terrestre.

**4.** Procédé selon la revendication 1, dans lequel la propriété additionnelle est sélectionnée dans le groupe consistant en (i) une perméabilité, (ii) un facteur de formation, (iii) une fonction de distribution de probabilité S/V, (iv) une relation entre la perméabilité relative et une saturation de fluide, (v) une perméabilité relative d'une phase de fluide non-mouillante dans la formation terrestre, (vi) une mobilité de point d'extrémité d'un fluide dans la formation terrestre et (vii) une perméabilité d'un premier fluide dans la formation terrestre à une saturation irréductible d'un deuxième fluide dans la formation terrestre.

**5.** Procédé selon la revendication 1, dans lequel la définition du modèle de l'échelle des pores comprend en outre au moins un de (i) modifier la taille des grains, (ii) ajouter un matériau autre que le matériau à un espace des pores du modèle, (iii) remplacer un grain du matériau par un matériau différent, (iv) prendre en compte la surcroissance du quartz, (v) prendre en compte le schiste dispersé remplissant les pores et (vi) prendre en compte le compactage.

6. Procédé selon la revendication 1, dans lequel la définition du modèle de l'échelle des pores comprend en outre l'utilisation d'un indicateur de schiste $V_{shale}$ obtenu en utilisant au moins un de (i) une mesure à rayons gamma naturels , (ii) des mesures NMR, (iii) une mesure de porosité des neutrons et (iv) une mesure de porosité de densité.

7. Procédé selon la revendication 1, dans lequel le au moins un capteur FE comprend en outre un capteur NMR et où la première propriété est au moins une de (i) un temps de relaxation longitudinal $T_1$ de la formation, (ii) un temps de relaxation transversal $T_2$ de la formation, et (iii) une aptitude à la diffusion de la formation.

8. Procédé selon la revendication 7, dans lequel la définition du modèle de l'échelle des pores comprend en outre :

    (A) dériver un spectre de relaxation d'aimantation des signaux NMR obtenus par au moins un capteur NMR précité; et
    (B) ajuster un paramètre du modèle de l'échelle des pores en utilisant une différence entre un spectre de relaxation NMR dérivé du modèle de l'échelle des pores et du spectre de relaxation d'aimantation.

9. Procédé selon la revendication 8, dans lequel la dérivation du spectre de relaxation d'aimantation comprend en outre l'utilisation d'une phase de mouillage sélectionnée parmi (I) une phase de mouillage avec de l'eau et (II) une phase de mouillage avec du pétrole.

10. Procédé selon la revendication 8, dans lequel le spectre de relaxation NMR est dérivé en utilisant au moins un de (I) un drainage d'un fluide de mouillage dans les espaces de pores du modèle et (II) l'imbibition d'un fluide de mouillage dans les espaces de pores du modèle.

11. Procédé selon la revendication 8, dans lequel l'ajustement du paramètre comprend en outre l'utilisation de la minimisation des moindres carrés.

12. Procédé selon la revendication 1, dans lequel la propriété est au moins une de (i) une vitesse de compression et (ii) une vitesse de cisaillement.

13. Procédé selon la revendication 1, dans lequel la au moins une propriété additionnelle de la formation comprend une relation entre la pression capillaire et une saturation de fluide.

14. Procédé selon la revendication 13, dans lequel la au moins une propriété additionnelle comprend en outre une perméabilité déterminée à partir d'une relation entre la pression capillaire et la saturation de fluide.

15. Procédé selon la revendication 1, dans lequel le capteur FE est directionnellement sensible, et où la définition du modèle de l'échelle des pores comprend en outre la définition d'une pluralité de différents modèles de l'échelle des pores dans des directions différentes.

16. Procédé selon la revendication 1, comprenant en outre l'étape consistant à mettre à jour le modèle de l'échelle des pores en utilisant des données d'au moins une carotte ; et où l'étape d'estimation est exécutée après la mise à jour.

17. Procédé selon la revendication 16, dans lequel la au moins une carotte est sélectionnée dans le groupe consistant en (i) une carotte de paroi latérale et (ii) une carotte en trou de fond.

18. Procédé selon la revendication 16, dans lequel la au moins une carotte comprend une pluralité de carottes directionnelles et où l'estimation d'une valeur de la au moins une propriété additionnelle de la formation terrestre comprend en outre l'estimation d'une pluralité de valeurs de la au moins une propriété additionnelle dans une pluralité de directions.

19. Procédé selon la revendication 16, dans lequel l'utilisation de données de la au moins une carotte comprend en outre au moins un de (i) analyser une section mince de la carotte et (ii) exécuter une analyse de la taille des grains.

20. Procédé selon la revendication 16, dans lequel la distribution des tailles des grains comprend en outre au moins une de (i) une distribution des tailles des grains de sable, (ii) une distribution de la surcroissance du quartz et (iii) une distribution du schiste dispersé.

21. Procédé selon la revendication 16, dans lequel la formation terrestre comprend une formation laminée, et où la au moins une carotte comprend en outre une pluralité de carottes dans des laminés différents.

22. Procédé selon la revendication 21, dans lequel la formation laminée comprend deux matériaux de constitution, et où la au moins une propriété additionnelle comprend une perméabilité horizontale et une perméabilité verticale.

23. Appareil pour l'évaluation d'une formation terrestre contenant des matériaux clastiques, l'appareil comprenant :

    (a) au moins un capteur d'évaluation de formation (FE) agencé pour être convoyé dans un trou de forage dans la formation terrestre contenant des matériaux clastiques, le au moins un capteur FE prenant une mesure de la première propriété de la formation terrestre ; et
    (b) un processeur qui est agencé pour :

        (A) définir un modèle de l'échelle des pores de la formation terrestre, dont la sortie correspond à la mesure, le modèle incluant des grains ayant une distribution de tailles de grains, et
        (B) estimer à partir du modèle de l'échelle des pores une valeur d'au moins une propriété additionnelle de la formation terrestre.

24. Appareil selon la revendication 23, dans lequel le processeur est agencé pour définir la sortie du modèle de l'échelle des pores pour qu'elle corresponde sensiblement aux mesures.

25. Appareil selon la revendication 23, dans lequel la première propriété est une porosité de la formation terrestre.

26. Appareil selon la revendication 23, dans lequel la propriété additionnelle est sélectionnée dans le groupe consistant en (i) une perméabilité, (ii) un facteur de formation, (iii) une fonction de distribution de probabilité S/V, (iv) une relation entre la perméabilité relative et une saturation de fluide, (v) une perméabilité relative d'une phase de fluide non-mouillante dans la formation terrestre, (vi) une mobilité de point d'extrémité d'un fluide dans la formation terrestre et (vii) une perméabilité d'un premier fluide dans la formation terrestre à une saturation irréductible d'un deuxième fluide dans la formation terrestre.

27. Appareil selon la revendication 23, dans lequel le processeur est agencé pour définir le modèle de l'échelle des pores par au moins un de (i) modifier une taille des grains dans le modèle, (ii) ajouter un matériau autre que le matériau à un espace des pores du modèle, (iii) remplacer un grain du matériau clastique par un matériau différent, (iv) tenir compte de la surcroissance du quartz, (v) tenir compte du schiste dispersé remplissant les pores, (vi) tenir compte du compactage et (vii) tenir compte de la surcroissance du calcite.

28. Appareil selon la revendication 23, dans lequel le processeur est agencé pour définir le modèle de l'échelle des pores en utilisant un indicateur de schiste $V_{shale}$ obtenu à partir d'au moins une d'une (i) une mesure à rayons gamma naturels, (ii) des mesures NMR, (iii) une mesure de porosité des neutrons et (iv) d'une mesure de porosité de densité.

29. Appareil selon la revendication 23, dans lequel le au moins un capteur FE comprend en outre un capteur NMR, et où la première propriété est au moins une de (i) un temps de relaxation longitudinal $T_1$ de la formation, (ii) un temps de relaxation transversal $T_2$ de la formation et (iii) une aptitude à la diffusion de la formation.

30. Appareil selon la revendication 29, dans lequel le processeur est agencé pour définir le modèle de l'échelle des pores en :

    (A) dérivant un spectre de relaxation d'aimantation des signaux NMR obtenus par le au moins un capteur NMR ; et
    (B) ajuster un paramètre du modèle de l'échelle des pores en utilisant une différence entre un spectre de relaxation NMR dérivé du modèle de l'échelle des pores et le spectre de relaxation d'aimantation.

31. Appareil selon la revendication 30, dans lequel le processeur est agencé pour dériver le spectre de relaxation d'aimantation en utilisant une phase de mouillage sélectionnée par (I) une phase de mouillage à l'eau et (II) une phase de mouillage au pétrole.

**32.** Appareil selon la revendication 30, dans lequel le processeur est agencé pour dériver le spectre de relaxation NMR en utilisant au moins un de (I) drainage d'un fluide de mouillage dans des espaces de pores du modèle, et (II) imbibition d'un fluide de mouillage dans les espaces de pores du modèle.

**33.** Appareil selon la revendication 30, dans lequel le processeur est agencé pour ajuster le paramètre en utilisant une minimisation des moindres carrés.

**34.** Appareil selon la revendication 23, dans lequel la première propriété est au moins une de (i) une vitesse de compression et (ii) une vitesse de cisaillement.

**35.** Appareil selon la revendication 23, dans lequel la au moins une propriété additionnelle de la formation comprend une relation entre la pression capillaire et une saturation de fluide.

**36.** Appareil selon la revendication 23, dans lequel la au moins une propriété additionnelle comprend en outre une perméabilité déterminée à partir d'une relation entre la pression capillaire et la saturation de fluide.

**37.** Appareil selon la revendication 23, dans lequel le au moins un capteur FE est agencé pour être porté sur un ensemble de trou de fond, l'appareil comprenant en outre un dispositif de convoyage sélectionné parmi (i) une ligne de fil, (ii) une installation tubulaire de forage et (iii) un câble lisse.

**38.** Appareil selon la revendication 23, dans lequel le capteur FE comprend un capteur d'orientation de sorte qu'il est sensible à la direction, et où le processeur est agencé pour définir le modèle de l'échelle des pores dans une pluralité de directions différentes en utilisant une sortie du capteur d'orientation.

**39.** Appareil selon la revendication 23, comprenant en outre un dispositif de carottage agencé pour être convoyé dans un trou de forage dans la formation terrestre contenant des matériaux clastiques, et pour récupérer au moins une carotte, et où le processeur est agencé pour utiliser les données obtenues par l'analyse de ladite au moins une carotte pour la mise à jour du modèle de l'échelle des pores, et pour estimer la valeur de la au moins une propriété additionnelle à partir du modèle de l'échelle de pores mis à jour.

**40.** Appareil selon la revendication 39, dans lequel le dispositif de carottage est sélectionné dans le groupe consistant en (i) un dispositif de carottage de paroi latérale et (ii) un dispositif de carottage du trou de fond.

**41.** Appareil selon la revendication 39, dans lequel la au moins une carotte comprend en outre une pluralité de carottes orientées dans une pluralité de directions, et où le processeur est agencé pour estimer la valeur de la au moins une propriété additionnelle dans la pluralité de directions.

**42.** Appareil selon la revendication 39, dans lequel le processeur est agencé pour mettre à jour la distribution des tailles des grains en utilisant au moins une de (i) une analyse d'une section mince de la carotte et (ii) une analyse de la taille des grains.

**43.** Appareil selon la revendication 39, dans lequel la distribution des tailles des grains comprend en outre au moins une d'une (i) distribution des tailles des grains de sable, (ii) une distribution de la surcroissance du quartz et (iii) une distribution du schiste dispersé.

**44.** Appareil selon la revendication 39, dans lequel la formation terrestre comprend une formation laminée, et où la au moins une carotte comprend en outre une pluralité de carottes dans des laminés différents.

**45.** Appareil selon la revendication 44, dans lequel la formation laminée comprend deux matériaux de constitution, et où la au moins une propriété additionnelle comprend une perméabilité horizontale et une perméabilité verticale.

**46.** Appareil selon la revendication 39, dans lequel le dispositif de carottage est agencé pour être convoyé dans le fond du trou par un d'un (i) fil de ligne et (ii) un organe tubulaire de forage.

**47.** Support de stockage lisible par ordinateur comprenant des instructions pour amener un processeur à exécuter les étapes de :

(a) définir un modèle de l'échelle des pores de la formation terrestre, dont la sortie correspond à la mesure, le modèle incluant des grains ayant une distribution des tailles des grains ; et

(b) estimer à partir du modèle de l'échelle des pores une valeur d'une propriété additionnelle de la formation terrestre.

**48.** Support lisible par ordinateur selon la revendication 47, le support comprenant en outre des instructions qui permettent au processeur d'utiliser des données d'une carotte pour la mise à jour du modèle de l'échelle des pores.

**49.** Support lisible par ordinateur selon la revendication 47 ou 48, comprenant en outre au moins un de (i) une ROM, (ii) une EPROM, (iii) une EAROM, (iv) une mémoire flash et (v) un disque optique.

Figure 1

Prior art

Figure 2 (prior art)

Figure 3 (prior art)

201

203

Figure 4a
Prior art

201'
203'

Figure 4b
Prior art

201"
203"
205

Figure 4c
Prior art

Figure 5 (prior art)

Figure 6a
Prior art

231

Figure 6b
Prior art

233

Figure 7 (prior art)

300

Pore scale
model

FE sensor 301

Update model 303

Predict new
formation
property 305

Figure 8

Figure 9 (prior art)

Figure 10 (prior art)

Figure 11

EP 1 896 876 B1

Figure 12

421

NMR
spectra

425

423

Separate
into water
and oil
phase

Sw

Initial grain
size

427

Measured
spectrum
for phase

429

NMR
spectra from
model

431

Difference
small
enough?

No

Change
grain size

433

Yes

Figure 13

Figure 14

Figure 15

620

Pore scale
model

621

Core
measurements

623

Update model

625

Predict new
formation
property

Figure 16

650

Updated Pore
scale model

Fluid
properties

652

Predict new
formation
property

654

Figure 17

Figure 18

$S_{Hh}$

Figure 19

Figure 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0247011 A
- US 4953399 A, Fertl
- US 5452761 A, Beard
- US 3321625 A, Wahl
- US 4271356 A, Groeschel
- US 78016704 A, Frost
- US 6088656 A
- US 5303775 A, Michaels
- US 6557632 B, Cernosek
- US 6157893 A, Berger